(19) Europäisches Patentamt / European Patent Office / Office européen des brevets

(11) **EP 0 944 211 B1**

(12) **FASCICULE DE BREVET EUROPEEN**

(45) Date de publication et mention de la délivrance du brevet:
**03.12.2014 Bulletin 2014/49**

(51) Int Cl.:
***H04L 25/03*** *(2006.01)*

(21) Numéro de dépôt: **99400376.2**

(22) Date de dépôt: **17.02.1999**

(54) **Procédé et dispositif d'égalisation autodidacte prédictive d'un canal de transmission d'un signal radioélectrique diffusé**

Verfahren und Einrichtung zur adaptiven, vorhersagenden Entzerrung eines Rundfunkübertragungskanal

Method and apparatus for the adaptive, predictive equalisation of a radio broadcast transmission channel

(84) Etats contractants désignés:
**BE DE GB IT NL**

(30) Priorité: **19.02.1998 FR 9802021**

(43) Date de publication de la demande:
**22.09.1999 Bulletin 1999/38**

(73) Titulaire: **TDF**
**75015 Paris (FR)**

(72) Inventeurs:
- **Nussbaum, Dominique**
  **68800 Vieux Thann (FR)**
- **Macchi, Odile**
  **Technopôle Metz,**
  **57070 Metz (FR)**

(74) Mandataire: **Cabinet Plasseraud**
**52, rue de la Victoire**
**75440 Paris Cedex 09 (FR)**

(56) Documents cités:
**EP-A- 0 707 401    EP-A- 0 880 253**

- **LANG TONG, DAN LIU: "Blind predictive decision-feedback equalization via the constant modulus algorithm" 1997 IEEE INTERNATIONAL CONFERENCE ON ACOUSTICS, SPEECH, AND SIGNAL PROCESSING, 21 - 24 avril 1997, pages 3901-3904 vol.5, XP002084390 New York, US**
- **TREICHLER, AGEE: "A new approach to multipath correction of constant modulus signals" IEEE TRANSACTIONS ON ACOUSTICS, SPEECH AND SIGNAL PROCESSING, vol. 31, no. 2, avril 1983 (1983-04), pages 459-472, XP000615155 NEW YORK, US**
- **BELFIORE, PARK: "Decision feedback equalization" PROCEEDINGS OF THE IEEE, vol. 67, no. 8, 1 août 1979 (1979-08-01), pages 1143-1158, XP000577362**
- **PAPADIAS C.B.; PAULRAJ A.J.: ""Decision-feedback equalization and identification of linear channels using blind algorithms of the Bussgang type", 29TH ASILOMAR CONFERENCE, 1995, pages 335-340,**

**Description**

L'invention concerne un procédé et un dispositif d'égalisation autodidacte prédictive d'un canal de transmission d'un signal radioélectrique diffusé.

Dans un nombre croissant d'applications de radio ou télédiffusion, telles que celles proposées par les sites multiservices et reçues dans un environnement comprenant un grand nombre d'émetteurs, il est indispensable de diminuer ou atténuer l'influence néfaste de brouilleurs, lesquels perturbent la réception d'un signal utile.

Lorsque le signal reçu est perturbé par la présence d'un brouillage important dans la bande de fréquences de réception du récepteur, les méthodes classiques usuelles, telles que le filtrage passe-bande ou l'augmentation de la puissance du signal émis, se révèlent insuffisantes. Des techniques spécifiques de lutte antibrouillage doivent alors être utilisées.

Parmi ces dernières, les plus connues sont le codage correcteur d'erreur, l'étalement de spectre, l'excision des brouilleurs et le filtrage d'antenne.

Dans le but d'améliorer les performances de systèmes existants, seuls les traitements tels que l'excision de brouilleurs et le filtrage d'antenne réalisés en réception peuvent être utilisés.

Une antenne adaptative est une antenne, du type antenne électronique, à capteurs multiples, qui permet de détecter les sources interférentes et de supprimer la réception de ces dernières automatiquement, en améliorant ainsi la réception d'une source utile. Ce type d'antenne apparaît le plus performant, ce d'autant plus qu'il permet la suppression ou l'atténuation de la réception de brouilleurs large bande, au contraire d'un exciseur. Pour une description plus détaillée de ce type d'antenne, on pourra utilement se reporter au mémoire de thèse de doctorat de P.CHEVALIER, Université de Paris Sud, 1991.

Un exciseur est un dispositif qui utilise les données reçues provenant d'un seul capteur. Cette technique permet, de manière générale, la réjection de brouilleurs à bande étroite. Le processus d'excision peut être mis en oeuvre soit dans le domaine fréquentiel, soit dans le domaine temporel.

Les dispositifs égaliseurs peuvent être compris comme des exciseurs temporels.

Lorsque l'égalisation est réalisée sans séquence de référence, les égaliseurs sont dits autodidactes. Ce type d'égaliseur est en général transverse. Une telle structure présente une limitation importante appelée compromis d'encoche.

Pour une description plus détaillée de ce type d'égaliseur, on pourra utilement se reporter à l'article publié par J.R. TREICHLER et B.G. AGEE, "A new approach to multipath correction of constant modulus signals", IEEE Trans. Acoust. Speech, Signal Processing , vol. ASSP-31, pp. 459-472, Apr. 1983.

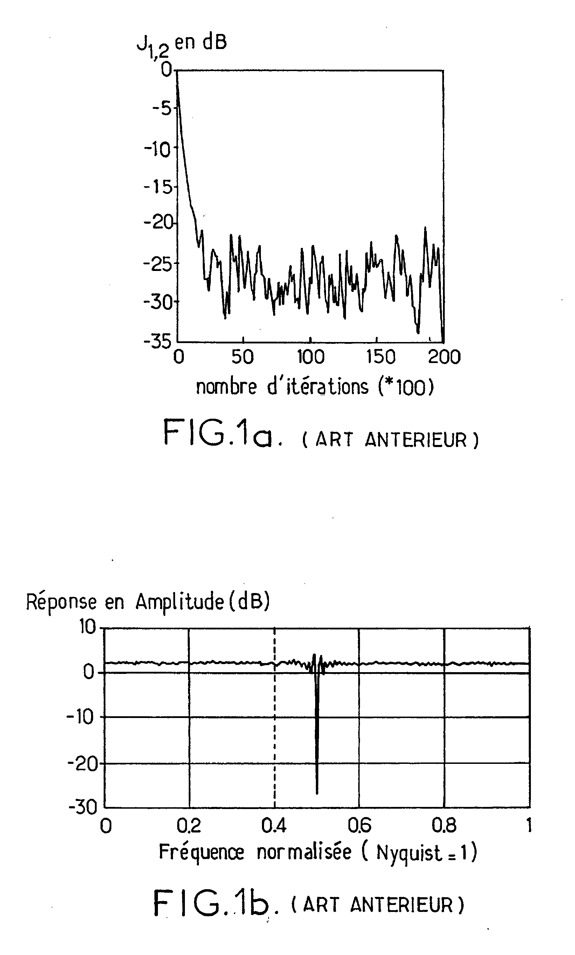

De tels égaliseurs adaptés suivant un algorithme de type GODARD (ou CMA), ainsi que représenté en figure 1a, présentent une convergence rapide, compte tenu du nombre de coefficients du filtre utilisé. Cependant, l'erreur résiduelle de filtrage reste importante, comprise entre -25 et -30 dB.

La réponse en fréquence d'un tel égaliseur, en fréquence normalisée, est représentée en figure 1b. Le compromis d'encoche, *"Notch compromise",* est mis en évidence. Plus on supprime le brouilleur, atténuation à la fréquence $\Psi$ du brouilleur, plus le filtre a tendance à déformer le signal utile. Ce compromis d'encoche est d'autant plus sévère que le nombre de coefficients du filtre est faible.

Un tel compromis limite les performances de ces filtres, en particulier en présence de signaux interférents co-canaux.

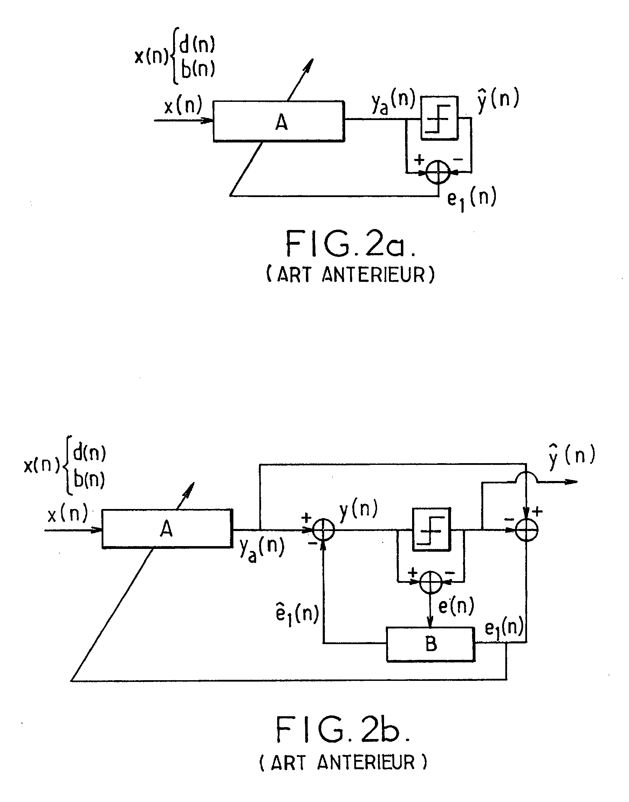

La structure d'un égaliseur linéaire est représentée en figure 2a.

Le filtre linéaire A, filtre transverse, construit en fait une estimation $y_a(n)$ de la donnée du signal reçu $x(n)$, signal utile $d(n)$ brouillé par un brouilleur $b(n)$, l'estimation $y_a(n)$ permettant d'obtenir une décision $\hat{y}(n)$. La différence entre l'estimation $y_a(n)$ de la donnée en sortie du filtre A et la décision $\hat{y}(n)$ constitue un signal d'erreur $e_1(n)$, permettant de piloter l'adaptation du filtre transverse A. De manière générale, une telle structure peut être améliorée au moyen d'une boucle de retour.

Un tel signal d'erreur $e_1(n)$ peut en fait être composé en deux parties, une partie prédictible et un bruit blanc, non prédictible. Dans le cas où la partie prédictible est nulle, il n'existe aucun moyen d'améliorer le processus d'estimation et en conséquence l'estimation $y_a(n)$.

Dans le cas contraire, il est possible de diminuer l'erreur d'estimation par une prédiction linéaire appliquée à une estimée de ce signal d'erreur $\hat{e}_1(n)$. La structure de la figure 2a est alors modifiée selon la figure 2b, représentée au dessin. Une estimée $\hat{e}_1(n)$ du signal d'erreur $e_1(n)$ est calculée par soustraction de la décision $\hat{y}(n)$ à l'estimation du signal utile $y_a(n)$ délivrée par le filtre transverse A.

Le signal d'erreur $e_1(n)$ est soumis à un filtrage adaptatif B piloté par le signal d'erreur d'estimation par prédiction linéaire $e(n) = e_1(n) - \hat{e}_1(n)$.

La meilleure estimation $y(n)$ de la donnée en sortie est donnée par la relation :

$$y(n) = A^t x(n) - \hat{e}_1(n)$$

soit

$$e(n) = A^t x(n) - \hat{e}_1(n) - \hat{y}(n)$$

où $A^t$ désigne la fonction de transfert du filtre transverse A pour l'échantillon courant de rang n.

De telles structures prédictives, conformément à l'étude de C.A. BELFIORE et J.H. PARK « Decision Feedback Equalization», Proceedings of the IEEE, vol.67, n°8, Aug.1979, sont équivalentes à des structures classiques dans le cas d'un égaliseur de dimension infinie.

En pratique toutefois, l'égaliseur prédictif se révèle moins performant en présence d'interférences intersymbôles, en raison du fait que le filtre transverse A et le filtre récursif B sont pilotés de façon à minimiser des fonctions coût différentes. Un tel type d'égaliseur est ainsi décrit par le document intitulé « BLIND PREDICTIVE DECISION-FEEDBACK EQUALIZATION VIA THE CONSTANT MODULUS ALGORITHM » publié par Lang Tong et Dan Liu, Deptmt of Electrical and Systems Engineering University of Connecticut, Storrs, U-157, CT 06269-3157.

Un égaliseur de type hybride DFE a en outre été décrit dans le document EP 0707401.

Outre le pilotage du filtre avant et du filtre prédictif de bruit par deux signaux d'erreur distincts, le filtre de contre réaction de suppression des interférences intersymbôles et le filtre avant sont pilotés par un signal externe.

Le document «Décision feedback equalization and identification of linear channels using blind algorithms of the Bussgang type » 29th ASILOMAR CONFERENCE, 1995, pages 335-340 décrit l'application d'une fonction coût différente pour écarter les minima triviaux.

La présente invention a pour objet de substituer aux structures prédictives de l'art antérieur des structures d'égalisation prédictive dans lesquelles l'introduction de séquences de référence est supprimée.

Un autre objet de la présente invention est en particulier la mise en oeuvre d'un procédé et d'un dispositif d'égalisation autodidacte prédictive d'un canal de transmission permettant une meilleure atténuation des signaux interférents, notamment à bande étroite, que celle obtenue avec les structures prédictives classiques.

Un autre objet de la présente invention est également, outre l'obtention précitée d'une meilleure atténuation des signaux interférents, une réduction significative du nombre de coefficients des filtres mis en oeuvre, par rapport aux égaliseurs de type EGPR et CMA de l'art antérieur.

Un autre objet de la présente invention est également la mise en oeuvre d'un procédé et d'un dispositif d'égalisation autodidacte prédictive d'un canal de transmission permettant en outre l'amélioration de la réception en présence de signaux interférents co-canaux, notamment à bande droite.

Un autre objet de la présente invention est, enfin, la mise en oeuvre d'un procédé et d'un dispositif d'égalisation autodidacte prédictive d'un canal de transmission permettant une amélioration de la réception en présence de trajets multiples selon les revendications 1 et 6.

Le procédé et le dispositif, objets de la présente invention, peuvent être mis en oeuvre afin d'assurer l'égalisation de tout type de canaux de transmission d'ondes électromagnétiques, sonores ou ultrasonores, soit sous forme analogique, soit sous forme numérique du signal transmis par ces canaux de transmission.

Le procédé et le dispositif, objets de la présente invention, trouvent en particulier application à la mise en oeuvre d'installations de radiodiffusion ou de télédiffusion de signaux radiofréquences à module sensiblement constant, tels que les signaux radiofréquences émis en modulation de fréquence, radio- ou télédiffusés.

Ils seront mieux compris à la lecture de la description et à l'observation des dessins ci-après, dans lesquels, outre les figures 1a, 1b et 2a, 2b relatives à l'art antérieur :

- la figure 3a représente, sous forme de schéma synoptique fonctionnel, un dispositif d'égalisation autodidacte prédictive d'un canal de transmission d'un signal radioélectrique conforme à l'objet de la présente invention ;
- la figure 3b représente un schéma équivalent du dispositif d'égalisation autodidacte prédictive conforme à l'objet de la présente invention, illustrant l'équivalence du critère de module constant et de minimisation de l'erreur de prédiction, équivalence permettant d'optimiser le mode opératoire de ce dispositif ;
- la figure 3c représente la convergence du processus d'égalisation en fonction du nombre d'itérations de filtrage et l'adéquation au modèle théorique du dispositif d'égalisation autodidacte prédictive du dispositif d'égalisation autodidacte prédictive, conforme à l'objet de la présente invention ;
- la figure 3d représente un dispositif auquel est associé un filtre transverse ;
- la figure 4 représente une première variante de réalisation avantageuse du dispositif d'égalisation autodidacte prédictive d'un canal de transmission d'un signal radioélectrique, objet de l'invention, dans laquelle un gain ajustable est introduit ;

- la figure 5 représente un dispositif d'égalisation autodidacte prédictive d'un canal de transmission d'un canal de transmission d'un signal radioélectrique, objet de l'invention, dans une deuxième variante de réalisation avantageuse ;

- les figures 6a à 6d représentent différents diagrammes de performances comparatives du dispositif d'égalisation autodidacte prédictive d'un canal de transmission d'un signal radioélectrique conforme à l'objet de la présente invention et de dispositifs de l'art antérieur vis-à-vis d'un brouilleur constitué par des signaux interférents co-canaux à bande étroite ;

- la figure 7a et la figure 7b représentent différents diagrammes de performances comparatives du dispositif d'égalisation autodidacte prédictive d'un canal de transmission d'un signal radioélectrique conforme à l'objet de la présente invention et de dispositifs de l'art antérieur dans le cas d'une propagation à trajets multiples, dans le cas d'un canal à minimum et à maximum de phase respectivement ;

- la figure 7c représente un diagramme de performances comparatives du dispositif d'égalisation autodidacte prédictive d'un canal de transmission d'un signal radioélectrique selon l'invention, dans le cas de la mise en oeuvre pour le processus de filtrage d'erreur de prédiction linéaire du processus dit de gradient stochastique GS et du processus dit des moindres carrés rapides MCR ;

- la figure 8a représente un organigramme général d'un procédé d'égalisation autodidacte prédictive d'un canal de transmission d'un signal radioélectrique conforme à l'objet de la présente invention, ce procédé étant susceptible d'être mis en oeuvre de manière continue ;

- la figure 8b représente une variante de mise en oeuvre du procédé tel que représenté en figure 8a par introduction d'une correction d'amplitude par un contrôle automatique de gain, ainsi que, le cas échéant, par introduction d'une correction fréquentielle fonction du canal de transmission ;

- les figures 9a, 9b et 9c représentent à titre illustratif un mode de réalisation préférentiel d'un dispositif d'égalisation autodidacte prédictive d'un canal de transmission, conforme à l'objet de la présente invention, mis en oeuvre dans un démodulateur numérique FM.

On indique en outre que le procédé et le dispositif d'égalisation autodidacte prédictive d'un canal de transmission, objets de la présente invention, peuvent être mis en oeuvre à partir de signaux radioélectriques numériques ou analogiques. Dans le cas de leur mise en oeuvre à partir de signaux analogiques, le procédé, objet de la présente invention, correspond à une mise en oeuvre continue alors que dans le cas d'une mise en oeuvre à partir de signaux numériques, cette mise en oeuvre continue est obtenue par répétition d'étapes successives. Ainsi, dans le cas de la mise en oeuvre du dispositif et du procédé, objets de l'invention, à partir d'un signal numérique, n désigne le rang des échantillons successifs de l'ensemble des signaux mis en oeuvre, alors que dans le cas de leur mise en oeuvre à partir d'un signal analogique, continu, n représente une variable temporelle.

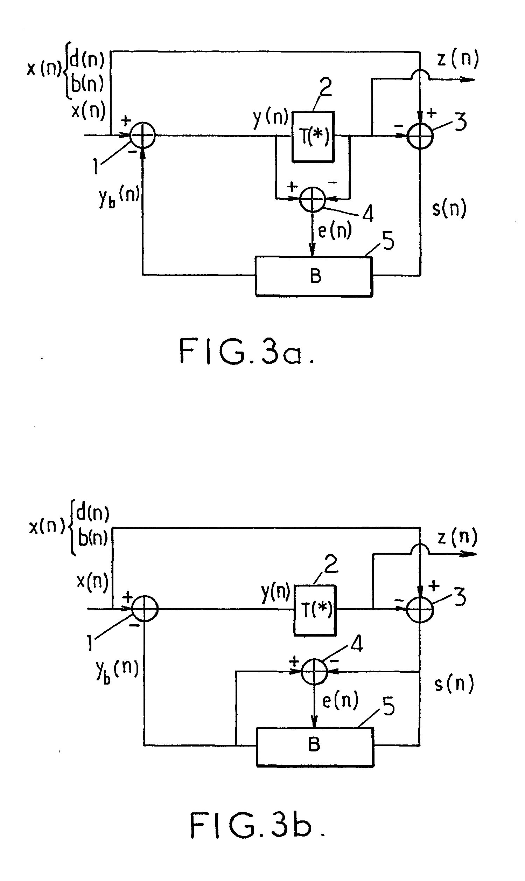

Une description plus détaillée d'un dispositif d'égalisation autodidacte prédictive d'un canal de transmission d'un signal radioélectrique numérique, conforme à l'objet de la présente invention, sera maintenant donnée en liaison avec les figures 3a, 3b et suivantes, dans un mode de réalisation préférentiel non limitatif à partir d'un signal numérique. Dans l'ensemble des figures, les mêmes références désignent les mêmes éléments.

D'une manière spécifique, on indique que le dispositif d'égalisation autodidacte prédictive d'un canal de transmission, objet de la présente invention, met en oeuvre un processus égaliseur à retour de décision prédictif, ci-après désigné PDFE, pour *Predictive Décision Feed-back* Equalizer en langage anglo-saxon.

D'une manière spécifique, on comprend que le signal radioélectrique numérisé x(n), n désignant le rang de l'échantillon courant de ce signal radioélectrique, consiste en un signal utile perturbé par un signal interférent, le signal utile perturbé et le signal interférent étant transmis par le canal de transmission.

On comprend en particulier que le processus mis en oeuvre concerne un signal utile à module sensiblement constant, le caractère sensiblement constant de ce signal correspondant par exemple à celui d'un signal radio- ou télédiffusé en modulation de fréquence, le caractère sensiblement constant de ce type de signal correspondant à celui obtenu grâce au système d'émission en radio- et télédiffusion de type classique.

D'une manière générale, on indique que le signal radioélectrique numérisé x(n) est celui obtenu en réception suite à un changement de fréquence, le signal radioélectrique numérisé x(n) correspondant donc à un signal à fréquence intermédiaire, c'est-à-dire un signal muni d'une onde porteuse à une fréquence déterminée.

Toutefois, et conformément au dispositif d'égalisation autodidacte prédictive d'un canal de transmission, conforme à l'objet de la présente invention, et de manière classique, le signal radioélectrique numérisé x(n) correspond de préférence à un signal analytique complexe, ce signal analytique complexe étant obtenu de manière classique à partir du signal à fréquence intermédiaire précité, de façon à obtenir une partie réelle et une partie imaginaire représentatives ensemble de l'amplitude et de la phase du signal à fréquence intermédiaire précité, ainsi qu'il sera décrit ultérieurement dans la description.

En raison du caractère classique du traitement introduit pour obtenir le signal analytique complexe précité à partir du signal à fréquence intermédiaire précédemment mentionné, et par convention dans un but de simplification, la dénomination signal radioélectrique numérisé x(n) sera commune dans le cadre de l'exposé du dispositif et du procédé d'égalisation autodidacte prédictive d'un canal de transmission, objets de la présente invention, aux fins de désigner soit le signal à fréquence intermédiaire, soit le signal analytique complexe obtenu directement à partir de ce dernier.

Compte tenu du processus général précédemment mentionné, et ainsi que représenté de manière non limitative sur la figure 3a, le dispositif d'égalisation autodidacte prédictive d'un canal de transmission d'un signal radioélectrique x(n), conforme à l'objet de la présente invention, comprend au moins une boucle récursive d'estimation d'un signal utile estimé, noté z(n), ce signal utile estimé ayant pour objet de représenter aussi fidèlement que possible le signal utile perturbé par le signal interférent précédemment mentionné et de ce fait non directement disponible.

Ainsi que représenté sur la figure 3a, la boucle récursive d'estimation comprend un module soustracteur 1, lequel reçoit le signal radioélectrique x(n) et sur une entrée de soustraction un signal interférent estimé, noté $y_b(n)$, ce signal interférent estimé étant délivré par la boucle récursive précitée. Le module soustracteur 1 délivre alors un signal utile intermédiaire, noté y(n). On comprend en particulier que, grâce à la soustraction du signal interférent estimé $y_b(n)$ au signal radioélectrique x(n), cette opération permet en fait d'obtenir le signal utile intermédiaire y(n) précité.

En outre, la boucle récursive comporte, ainsi que représenté sur la figure 3a, un module 2 de traitement non linéaire du signal utile intermédiaire, lequel reçoit ce dernier et délivre le signal utile estimé z(n). D'une manière générale, on indique que le traitement non linéaire introduit, noté T(*) est une non-linéarité de BUSSGANG ayant en fait pour objet de remplacer, dans un processus de type PDFE, la décision par ce type de non-linéarité. Le signal utile estimé z(n) constitue une estimation du signal utile transmis par le canal de transmission soumis au processus d'égalisation.

La non-linéarité de BUSSGANG précitée comprend différentes fonctions non linéaires pouvant être mises en oeuvre, telles que celles données à titre d'exemple dans le tableau ci-après :

| ALGORITHME | NON LINEARITE T(*) |
|---|---|
| DFE<br>Sato<br>Stop-and-Go | $\hat{y}$ valeur décidée<br>y sign(y)<br>$\frac{1}{2}\left[\left(f^R + f^1\right)\hat{e} + \left(f^R - f^1\right)\hat{e}*\right]$ |
| Godard p-q | $\frac{y}{|y|}\left\{|y| - |y|^{p-1}\left||y|^p - r^p\right|^{q-1} \operatorname{sign}\left(|y|^p - r^p\right)\right\}$ |
| Godard p=q=2,r=1 CMA(2,2) | $\frac{y_n}{|y_n|}\left(2|y_n| - |y_n|^3\right)$ |
| Godard p=1,q=2,r=1 CMA (1,2) | $\frac{y_n}{|y_n|}$ |

Ainsi que représenté en outre sur la figure 3a précitée, la boucle récursive comprend également un deuxième élément soustracteur, portant la référence 3, lequel reçoit le signal radioélectrique x(n), ainsi que sur une entrée de soustraction le signal utile estimé z(n) précité. Le deuxième élément soustracteur 3 délivre alors, grâce à l'opération de soustraction du signal utile estimé z(n) au signal radioélectrique x(n), un signal interférent discriminé, noté s(n).

Outre les éléments précités, la boucle récursive d'estimation du signal utile estimé z(n) comporte un module 4 de calcul d'un signal d'erreur, noté e(n), entre le signal utile intermédiaire y(n), lequel n'a pas été soumis au traitement non linéaire par le module 2, et le signal utile estimé z(n). Le module 4 de calcul du signal d'erreur e(n) consiste en un module soustracteur recevant, d'une part, le signal utile intermédiaire y(n), et, d'autre part, sur une entrée de soustraction, le signal utile estimé z(n) précité.

Enfin, la boucle récursive précitée comprend également un module 5 de filtrage adaptatif, désigné de manière littérale par la lettre B, lequel reçoit le signal interférent discriminé s(n) sur son entrée de filtrage, ce module de filtrage adaptatif étant en outre piloté par le signal d'erreur e(n) délivré par le module 4 de calcul du signal d'erreur, pour délivrer le signal interférent estimé $y_b(n+1)$ au module soustracteur 1 à l'entrée de soustraction de ce dernier.

Le mode opératoire de l'ensemble et en particulier de la boucle récursive d'estimation du signal utile estimé z(n) du dispositif d'égalisation autodidacte, objet de la présente invention, peut être résumé de la façon ci-après :

La soustraction au signal radioélectrique x(n) au niveau du module soustracteur 1 du signal interférent estimé $y_b(n)$, d'une part, puis le traitement non linéaire réalisé par le module de traitement 2 de ce dernier pour l'obtention du signal utile estimé z(n) et la soustraction au même signal radioélectrique numérisé x(n) de ce même signal utile estimé z(n) pour l'obtention du signal interférent discriminé s(n), d'autre part, permettent, grâce au filtrage adaptatif réalisé par le module 5 de filtrage adaptatif piloté par le signal d'erreur e(n) engendré à partir du signal utile intermédiaire y(n) et du signal utile estimé z(n), d'engendrer le signal interférent estimé $y_b(n+1)$. La convergence du processus d'égalisation après un nombre déterminé d'itérations permet d'obtenir un système stable et, en particulier, la minimisation d'une fonction coût permettant l'obtention d'une valeur minimale du signal d'erreur e(n) pour un signal utile estimé z(n) aussi proche que possible du signal utile composant le signal radioélectrique numérisé x(n) et un signal interférent discriminé s(n) aussi proche que possible du signal interférent perturbant le signal utile, au critère de convergence et de valeur minimale du signal d'erreur près.

D'une manière générale, on rappelle que le dispositif d'égalisation autodidacte prédictive d'un canal de transmission, objet de la présente invention, est mis en oeuvre pour un signal radioélectrique par exemple numérisé x(n) à module sensiblement constant. Pour une valeur b connue a priori du module du signal utile, le module 2 de traitement non linéaire est choisi de façon à présenter une fonction du type :

$$T(y(n)) = b\frac{y(n)}{|y(n)|}$$

où b désigne un nombre réel positif donné, représentatif de ce module.

Dans un tel cas, le module de filtrage adaptatif 5 est formé par un filtre linéaire adapté au moyen d'une fonction coût vérifiant la relation :

$$J_{p,q} = E\left(\left||y(n)|^p - (b)^p\right|^q\right)$$

où E(*) désigne l'espérance mathématique.

Dans cette relation, la fonction coût précitée $J_{p,q}$ peut représenter le module du signal d'erreur e(n).

Dans la relation précitée, les paramètres p et q sont des entiers positifs.

Dans un mode de réalisation particulier avantageux non limitatif, le choix des paramètres p et q était p=1 et q=2.

Dans de telles conditions, la fonction coût vérifie alors la relation :

$$J_{1,2} = E\left(|y(n) - z(n)|^2\right) = E\left(|s(n) - y_b(n)|^2\right)$$

La double égalité de la relation précédente peut être démontrée en tenant compte de la relation ci-après :

$$y(n) = x(n) - y_b(n)$$

avec

$$z(n) = x(n) - s(n)$$

Dans ces conditions, et compte tenu de la relation donnée par l'opération de filtrage par le module 5 ci-après :

$$y_b(n) = B^H(n)S(n-1)$$

où B(n) désigne la fonction de transfert du module de filtrage 5 pour l'échantillon de rang n précité, et S(n-1) l'échantillon de rang n-1 mémorisé, l'exposant H désignant la fonction transposée conjuguée.

La minimisation du critère de module constant portant sur la première égalité est équivalente à la minimisation de l'erreur de prédiction de filtrage portant sur la deuxième égalité.

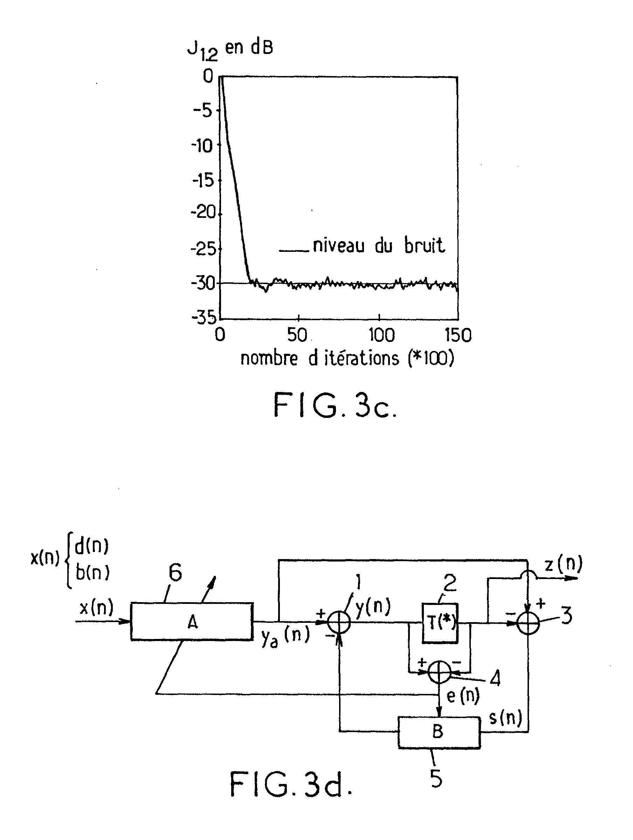

Les performances de la boucle récursive constitutive du dispositif d'égalisation autodidacte prédictive d'un canal de transmission, objet de la présente invention, ainsi que représentées en figure 3c, correspondent à celles prévues par la théorie.

Sur la figure 3b, on a en outre représenté le schéma équivalent de la boucle récursive précitée dans laquelle l'équivalence entre la minimisation du critère de module constant et la minimisation de l'erreur de prédiction est illustrée. Ce caractère d'équivalence permet en conséquence de conduire le pilotage du module de filtrage 5 à partir d'un critère de signal d'erreur, portant soit sur la différence entre le signal utile estimé z(n) et le signal utile intermédiaire y(n), ainsi que représenté en figure 3a, soit entre le signal interférent discriminé s(n) et le signal interférent estimé $y_b$(n), ainsi que représenté en figure 3b.

D'une manière générale, on indique que la boucle récursive telle que représentée en figure 3a ou 3b, conforme à l'objet de la présente invention, se distingue du simple principe ou processus PDFE classique, dans lequel, pour améliorer la réception de signaux à module constant, un simple remplacement de la décision prise par la non-linéarité de BUSSGANG est effectué. En effet, un tel remplacement ne peut effectivement fonctionner en raison du problème posé par la présence manifeste de minima globaux non désirables dans les égaliseurs récursifs de l'art antérieur.

Au contraire, conformément au dispositif d'égalisation autodidacte prédictive d'un canal de transmission, conforme à l'objet de la présente invention, il est alors possible, à partir d'un dispositif représenté à la figure 3d, dans lequel un filtre avant A réalisant un filtrage transverse, filtrage adaptatif, fonction du canal, ce filtre adaptatif A étant alors piloté par le même signal d'erreur e(n) que celui pilotant le module de filtrage 5, les deux filtrages adaptatifs, module de filtrage 5, B(n), module de filtrage avant 6, A(n), minimisant la même fonction coût et en outre par le choix d'une valeur particulière d'un des coefficients du filtre avant 6, ce coefficient pouvant par exemple être pris égal à 1, d'éviter la présence des minima globaux non désirables.

Une description plus détaillée d'un dispositif d'égalisation autodidacte prédictive d'un canal de transmission d'un signal radioélectrique de préférence numérique, conforme à l'objet de la présente invention, comportant un filtre avant 6 mais dans lequel, conformément à un aspect particulièrement avantageux du mode opératoire de ce dispositif, la fonction coût utilisée pour piloter le module de filtrage avant 6 et le module de filtrage adaptatif 5 est identique, sera donnée ultérieurement dans la description.

Le mode de réalisation du dispositif d'égalisation autodidacte prédictif d'un canal de transmission d'un signal radioélectrique, objet de la présente invention, tel que représenté en figures 3a et 3b, donne satisfaction dans le cas où les conditions d'émission et bien entendu de réception du signal à module constant tel que défini précédemment dans la description sont satisfaites, pour autant que l'amplitude de ce signal est effectivement connue avec une précision satisfaisante. Toutefois, en raison des conditions de propagation dans le milieu de transmission des signaux radioélectriques, une telle hypothèse n'est pas systématiquement satisfaite.

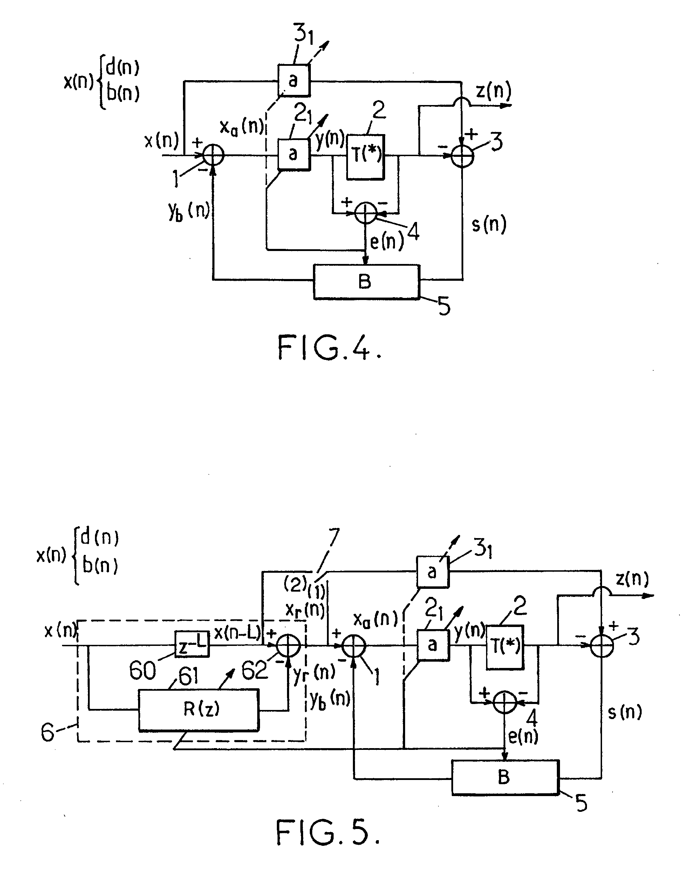

Une première variante de mise en oeuvre particulièrement avantageuse du dispositif d'égalisation autodidacte prédictive, objet de la présente invention, ayant pour objet de remédier à l'inconvénient précité, c'est-à-dire à l'absence de constance du module du signal reçu, sera maintenant donnée en liaison avec la figure 4. D'une manière générale, on indique que, outre les éléments précédemment décrits dans la description en liaison avec les figures 3a et 3b, le dispositif d'égalisation autodidacte prédictive, objet de la présente invention, comporte en outre un élément permettant d'ajuster en amplitude le signal radioélectrique et le signal utile estimé par exemple.

Ainsi que représenté sur la figure 4 précitée, le dispositif comporte en outre un module de gain ajustable, portant la référence 21, lequel est alors placé en amont du module 2 de traitement non linéaire afin d'opérer un contrôle automatique de gain à partir du signal d'erreur e(n). Le module $2_1$ de gain ajustable est alors piloté par le signal d'erreur e(n). Le pilotage peut être effectué pour chaque échantillon de rang successif considéré lors de la mise en oeuvre à partir d'un signal numérique. On suppose toutefois que l'adaptation en amplitude par l'intermédiaire du module de contrôle automatique de gain $2_1$ est suffisamment lente pour ne pas dégrader les performances du filtre prédicteur, c'est-à-dire du module de filtrage 5.

Le contrôle automatique de gain ainsi obtenu permet de minimiser la fonction coût lorsque le module du signal utile est a priori inconnu ou lentement variable.

Dans un tel cas, la fonction de transfert du module de gain ajustable $2_1$ peut être adaptée pour chaque échantillon selon la relation ci-après :

$$a(n) = a(n-1) - \delta_a \left( |y(n)| - 1 \right)$$

Dans cette relation a(n) désigne la valeur du gain effectivement appliquée à l'échantillon de rang n du signal utile intermédiaire délivré par le premier module soustracteur 1, ce signal utile intermédiaire étant noté sur la figure 4 $x_a(n)$, afin de conserver la notation précédente y(n) pour le signal utile intermédiaire délivré par le module à gain ajustable $2_1$ au module de traitement non linéaire 2.

Le choix de la position du module à gain ajustable $2_1$ à l'intérieur de la boucle récursive en amont du module de traitement non linéaire 2 ,permet de manière avantageuse, de minimiser la même fonction coût au niveau du module de filtrage prédictif 5 et d'obtenir ainsi une convergence plus rapide et une amplitude d'erreur résiduelle moins importante.

Toutefois, en raison du fait que le critère de minimisation porte sur la fonction coût précédemment mentionnée dans la description pour p=1 et q=2, la minimisation de cette fonction coût en présence du module à gain ajustable $2_1$, soit pour la relation :

$$y(n) = a(n)x(n) - a(n)y_b(n)$$

reste cohérente pour le module de filtrage 5 jouant le rôle de filtre de prédiction si le signal d'erreur e(n) est globalement conservé au facteur de gain a(n) près, soit pour la relation :

$$y(n) - z(n) = a(n)\left(s(n) - y_b(n)\right)$$

Dans ces conditions, on obtient alors la valeur du signal utile estimé :

$$z(n) = a(n)x(n) - a(n)s(n).$$

Le signal interférent discriminé s(n) s'écrit alors :

$$s(n) = \frac{x(n) - z(n)}{a(n)}$$

Dans ces conditions, le signal interférent discriminé s(n) est connu à un terme multiplicatif près et il est ainsi possible, dans un but de rationaliser la mise en oeuvre matérielle du dispositif d'égalisation autodidacte prédictive tel que représenté en figure 4, de multiplier arbitrairement le signal radioélectrique x(n) délivré au module soustracteur 3 par la même valeur de gain ajustable a(n). Ainsi que représenté sur la figure précitée, un module de gain ajustable $3_1$ identique au module de gain ajustable $2_1$ et piloté par le même signal d'erreur e(n) est alors inséré entre l'entrée commune du signal radioélectrique du module soustracteur 1 et celle du module soustracteur 3.

Dans ces conditions, le signal interférent discriminé s(n) vérifie la relation :

$$s(n) = a(n)x(n) - z(n) .$$

Outre la mise en oeuvre d'un contrôle automatique de gain tel que représenté en figure 4, il est possible de prévoir la mise en oeuvre d'une estimation récursive du module du signal. Pour une estimation v(n), pour l'échantillon de rang n considéré, l'adaptation peut alors vérifier la relation :

$$v(n) = v(n-1) - \delta\left(v(n-1) - |y(n)|\right)$$

Dans cette relation, v(n-1) indique la valeur de l'estimation du module du signal pour l'échantillon de rang précédent, et $\delta$ indique un pas d'adaptation nombre réel compris strictement entre 0 et 1. Ce pas d'adaptation peut avoir

pour valeur 10$^{-2}$ par exemple.

On indique en fait que la mise en oeuvre d'une estimation du module de manière récursive est équivalente à celle d'un contrôle automatique de gain lorsque le pas d'adaptation est suffisamment faible.

Une deuxième variante de réalisation du dispositif d'égalisation autodidacte prédictive, objet de la présente invention, sera maintenant donnée en liaison avec la figure 5 dans le cas où le canal de transmission soumis à égalisation est le siège de signaux d'interférence canal adjacent peu prédictibles.

Dans un tel cas, ainsi que représenté sur la figure 5, le dispositif d'égalisation autodidacte prédictive, objet de la présente invention, comprend en outre, en amont de la boucle récursive, un module de filtrage transverse, le module 6 précédemment mentionné en liaison avec la figure 3b. Le module 6 de filtrage transverse est piloté par le signal d'erreur e(n). Il reçoit le signal radioélectrique numérisé x(n) et délivre un signal radioélectrique corrigé, noté x$_r$(n), à la boucle récursive.

D'une manière générale, on indique que le filtre transverse 6 comporte, ainsi que mentionné précédemment, un coefficient fixe pour éviter l'apparition des minima globaux. L'amplitude du signal est corrigée par la valeur de gain ajustable a(n). Le filtre transverse 6 peut donc être réalisé sous la forme d'un filtre linéaire, le coefficient fixe de ce dernier étant placé au milieu du filtre, afin de conférer au dispositif d'égalisation autodidacte prédictive, objet de la présente invention, un maximum de degrés de liberté.

Dans un mode de réalisation préférentiel, tel que représenté sur la figure 5, le filtre transverse 6 peut comporter un circuit retardateur de L échantillons du signal radioélectrique x(n), ce circuit retardateur référencé 60 recevant le signal radioélectrique x(n) et délivrant un signal radioélectrique retardé, noté x(n-L). Le filtre transverse 6 comporte également un module de filtrage linéaire proprement dit, portant la référence 61, recevant le signal radioélectrique x(n), le module de filtrage linéaire 61 étant piloté par le signal d'erreur e(n) délivré par le module soustracteur 4 pour délivrer un signal radioélectrique filtré, noté y$_r$(n).

Enfin, le filtre transverse 6 comprend également un module soustracteur auxiliaire 62, lequel reçoit le signal radioélectrique retardé x(n-L) et le signal radioélectrique filtré y$_r$(n), pour délivrer un signal radioélectrique corrigé x$_r$(n).

Enfin, ainsi que représenté sur la figure 5, l'entrée du module soustracteur 3, ou plus précisément l'entrée du module à gain ajustable 3$_1$, est connectée en entrée de la boucle récursive par l'intermédiaire d'un commutateur double voie, portant la référence 7. Un première voie (1) de ce commutateur est connectée en sortie du module soustracteur auxiliaire 62, et une deuxième voie (2) de ce commutateur est connectée en entrée de ce même module soustracteur auxiliaire pour recevoir le signal radioélectrique retardé x(n-L).

En fonction de la position du commutateur 7, l'entrée de la boucle récursive est ainsi choisie de la manière ci-après :

-   position (1) :

> dans cette situation, la position de la boucle récursive reçoit le signal radioélectrique corrigé x$_r$(n). Une telle structure se rapproche des structures de l'art antérieur, désignées par CMA-PDFE, avec toutefois un critère de minimisation de coût commun et l'impossibilité de converger vers des minima globaux indésirables.

-   position (2) :

> dans cette situation, le signal utile intermédiaire y(n) vérifie la relation :

$$y(n) = a(n)\big(x(n-L) - y_r(n) - y_b(n)\big).$$

Dans ces conditions, le critère de minimisation porte sur l'expression :

$$\big|s(n) - y_r(n) - y_b(n)\big|^2.$$

Alors que dans la position (1), la structure du dispositif d'égalisation autodidacte prédictive, objet de la présente invention, se rapproche de la structure classique désignée par CMA-PDFE, les performances dans une telle position sont toutefois légèrement supérieures pour l'égalisation de canaux de transmission à maximum de phase.

Au contraire, en position (2), le dispositif d'égalisation autodidacte prédictive, objet de la présente invention, minimise en fait un critère plus global, ce qui permet une meilleure égalisation de canaux de transmission à minimum de phase.

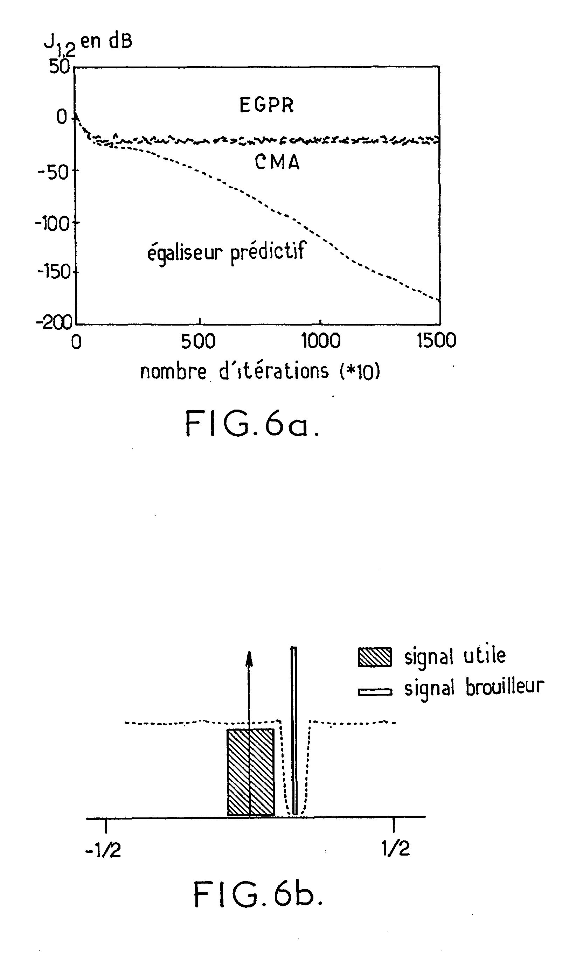

Des résultats comparatifs d'essais d'un dispositif d'égalisation autodidacte prédictive, conforme à l'objet de la présente invention, vis-à-vis de structures de l'art antérieur en présence d'un brouilleur, c'est-à-dire d'un signal perturbateur sans relation de phase précise avec le signal utile, seront maintenant donnés en liaison avec les figures 6a à 6d. Ces essais ont été réalisés avec le commutateur 7 placé en position 2 sur la figure 5.

En premier lieu, le dispositif d'égalisation autodidacte, objet de la présente invention, a été soumis à un test dans le cas d'un signal numérique MDP-4 brouillé par un signal interférent sinusoïdal tel que rapport d'amplitude signal numérique sur signal brouilleur soit égal à 6 dB. Le dispositif d'égalisation autodidacte prédictive, conforme à l'objet de la présente invention, tel que représenté en figure 5, comportait neuf coefficients pour la partie transverse, c'est-à-dire pour le filtre transverse 61 précédemment mentionné, et trois coefficients pour la partie prédictive, le module de filtrage 5. La comparaison des performances a été effectuée vis-à-vis d'un filtrage de type CMA(1,2) avec soixante coefficients et a un égaliseur de GODARD par prédiction et rétroprédiction, désigné ci-après par EGPR.

Ainsi que représenté sur la figure 6a, et conformément à la théorie, le processus CMA ne parvient pas à supprimer en totalité le brouilleur en raison du compromis d'encoche, alors que l'erreur résiduelle tend vers la valeur zéro, erreur résiduelle donnée par la valeur exprimée en dB du module de la fonction coût $J_{1,2}$ inférieure à -180 dB après un nombre d'itérations de l'ordre de 15000 pour le dispositif d'égalisation autodidacte prédictive, objet de la présente invention.

Le processus de filtrage EGPR présente un comportement plus médiocre que celui du processus CMA en présence d'un signal interférent co-canal ou brouilleur.

On rappelle alors que par la mise en oeuvre d'un filtre transverse de l'art antérieur précité dans le cadre d'une configuration en l'absence de bruit blanc, on peut au mieux supprimer un brouilleur sensiblement sinusoïdal grâce à la mise en oeuvre d'une centaine de coefficients dans le filtre transverse précité, alors que grâce à la mise en oeuvre de la boucle récursive, objet de la présente invention, un seul coefficient suffit à annuler exactement le signal brouilleur précité avec un gain d'atténuation quasi infini. Le caractère quasi infini du gain apparaît du fait de la réduction des oscillations après un nombre d'itérations inférieur à 5000 d'adaptation du module de filtrage 5 précité.

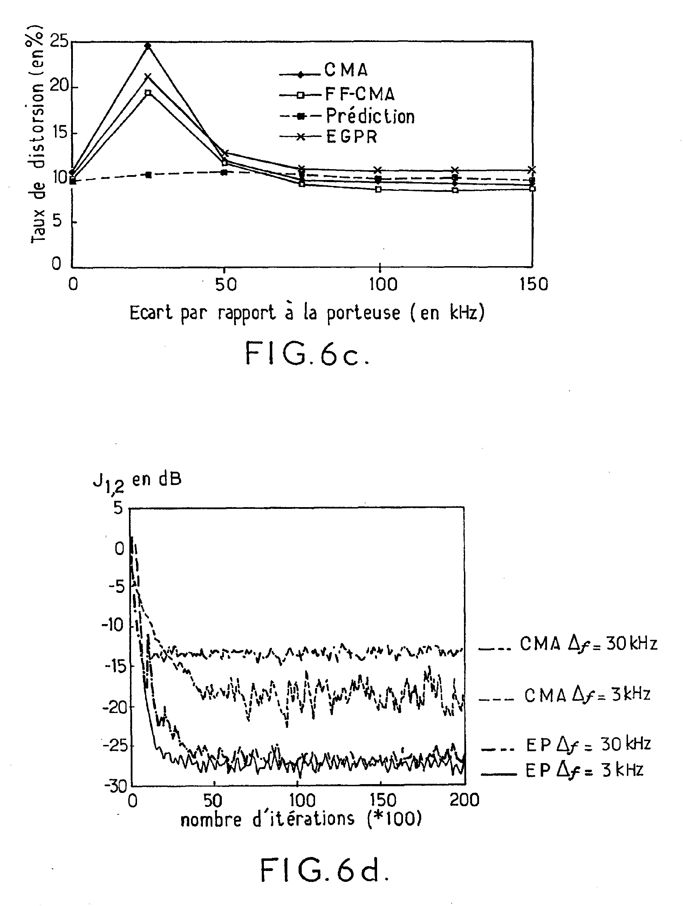

Le dispositif d'égalisation autodidacte prédictive, conforme à l'objet de la présente invention, est ensuite testé vis-à-vis d'un signal modulé en fréquence, un signal de radiodiffusion perturbé par un brouilleur sinusoïdal. De tels résultats de comparaison sont représentés en figure 6b et 6c.

Lorsqu'on utilise un filtre transverse de l'art antérieur, on obtient de très bonnes performances tant que le signal brouilleur n'est pas situé dans la bande du signal utile, c'est-à-dire tant que l'écart entre la fréquence porteuse du signal utile et le brouilleur est suffisamment important. Lorsque la fréquence du brouilleur est proche, cet écart de fréquence ΔF étant inférieur à 50 kHz ainsi que représenté sur la figure 6c sur laquelle le taux de distorsion en % a été porté en ordonnées en fonction de l'écart de la fréquence du brouilleur sinusoïdal vis-à-vis de la fréquence porteuse du signal utile, les structures de type classique, transverses ou récursives, de type CMA, FF-CMA et EGPR telles que représentées en figure 6c, ne parviennent plus à supprimer le brouilleur, le taux de distorsion étant, pour les structures précitées, supérieur à 15% sur la quasi totalité de l'intervalle définissant un écart par rapport à la fréquence porteuse inférieur à 50 kHz. Au contraire, le dispositif d'égalisation autodidacte prédictive, objet de la présente invention, permet de supprimer sensiblement le brouilleur dans tous les cas, c'est-à-dire quel que soit l'écart de la fréquence du brouilleur par rapport à la fréquence de la porteuse du signal utile, le taux de distorsion étant maintenu sensiblement inférieur à 10% quel que soit cet écart, ainsi que représenté pour la courbe désignée par Prédiction relative à un dispositif d'égalisation autodidacte prédictive, conforme à l'objet de la présente invention.

Enfin, ce dernier a été testé dans le cadre d'un signal brouilleur modulé en fréquence. Le signal brouilleur était un signal présentant un niveau d'amplitude inférieur de 6 dB à celle du signal utile modulé par un signal sinusoïdal à 1 kHz. L'amplitude de modulation ou excursion en fréquence choisie a été de 3 kHz puis 30 kHz. Les résultats comparatifs sont donnés en figure 6d pour un processus de filtrage CMA pour une excursion en fréquence du signal brouilleur Δf=30 kHz, respectivement 3 kHz précité, et pour les mêmes valeurs d'excursion en fréquence, pour un dispositif conforme à l'objet de la présente invention, les courbes de l'erreur résiduelle $J_{1,2}$ étant exprimées en dB en fonction du nombre d'itération, ces courbes étant désignées par EP pour le dispositif d'égalisation autodidacte prédictive, objet de l'invention.

Les résultats médiocres obtenus par un filtrage de type CMA de l'art antérieur sont dus en toute hypothèse à la mise en oeuvre d'un compromis délicat entre la précision du filtrage, c'est-à-dire du niveau résiduel d'erreur et la poursuite en fréquence en raison de l'excursion en fréquence du signal brouilleur précité. On comprend en particulier que dans le cadre de la mise en oeuvre d'un filtre transverse et d'un processus CMA de filtrage correspondant, pour éliminer une partie importante du signal brouilleur, il est nécessaire de mettre en oeuvre un nombre de coefficients important, ce qui est manifestement incompatible avec le problème de la poursuite en fréquence du signal brouilleur précité.

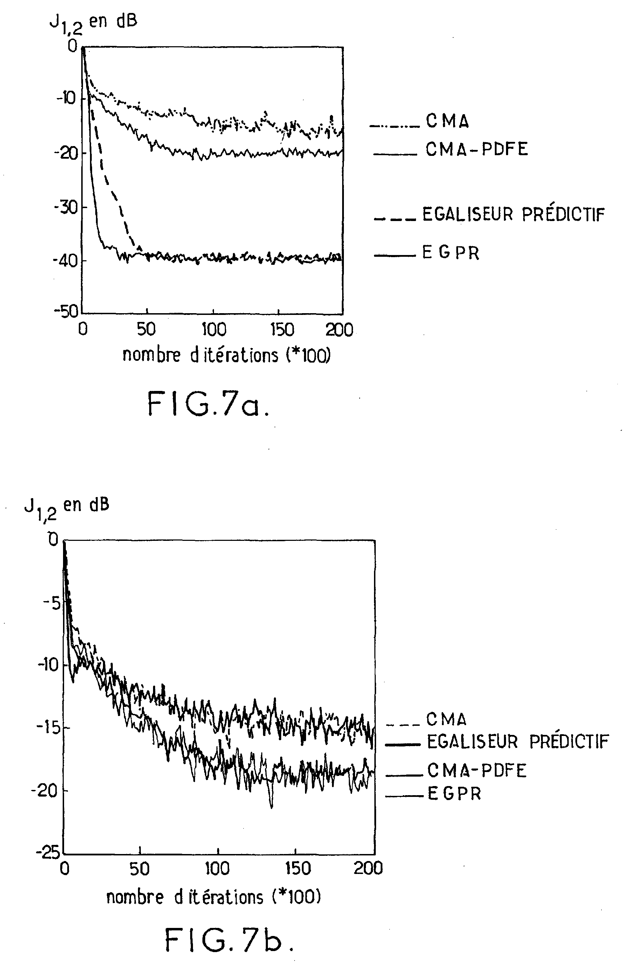

Le dispositif d'égalisation autodidacte prédictive, objet de la présente invention, bien que conçu au départ afin d'assurer la réjection de signaux d'interférence permet toutefois également de tirer parti du processus de récursivité en présence de trajets multiples. Des performances comparatives sont illustrées en relation avec les figures 7a et 7b pour un dispositif conforme à l'objet de la présente invention vis-à-vis d'un processus de filtrage CMA classique à douze coefficients, désigné par CMA, une structure adaptée du PDFE avec minimisation de deux critères, désignée par CMA-PDFE, avec douze coefficients pour la partie transverse, une structure pour l'égalisation de trajets multiples, de type EGPR, les parties transverse et récursive comportant respectivement neuf et trois coefficients.

Dans le dispositif, objet de la présente invention, soumis au test de comparaison, et de structure telle que représentée en figure 5, les parties transverse et récursive comportaient respectivement neuf et trois coefficients, le commutateur 7 étant toujours en position 2.

Sur la figure 7a, on a représenté la fonction coût $J_{1,2}$, ou le module de l'erreur résiduelle en dB, en fonction du nombre d'itérations pour les structures précédemment mentionnées confrontées à un problème d'égalisation d'un canal à minimum de phase.

La fonction de transfert du canal vérifiait une relation de la forme :

$$C(z) = 1 - 0{,}9z^{-1} \ .$$

Les essais ont été effectués en présence d'un bruit blanc tel que le rapport signal à bruit soit égal à 40 dB.

Sur la figure 7a, on constate que les performances mettant en oeuvre un processus CMA pur ou un processus CMA-PDFE sont modestes, l'erreur résiduelle restant de l'ordre de -20 dB. Ce résultat modeste est dû à l'utilisation de douze coefficients pour l'ensemble des filtres, ce nombre de coefficients, insuffisant, ne permettant pas de modéliser l'inverse du canal de transmission de manière satisfaisante.

Au contraire, tant pour le dispositif d'égalisation autodidacte prédictive, objet de la présente invention, désigné par égaliseur prédictif, que pour la structure connue EGPR, l'égalisation quasi parfaite à -40 dB pour la valeur du module d'erreur résiduelle est obtenue. Cependant, il faut noter toutefois une vitesse de convergence plus lente pour le dispositif d'égalisation autodidacte prédictive, conforme à l'objet de la présente invention, cette convergence étant toutefois obtenue après 5000 itérations.

La figure 7b représente des essais comparatifs pour les mêmes structures de l'art antérieur que celles mentionnées en figure 7a et pour la structure du dispositif objet de la présente invention, telle que représentée en figure 5, lesquelles sont confrontées à l'égalisation d'un canal de transmission à maximum de phase. Le canal de transmission présentait la fonction de transfert ci-après :

$$C(z) = 1 - 1{,}1z^{-1} \ .$$

De même que dans le cas des essais réalisés vis-à-vis d'un canal à minimum de phase tel que représenté en figure 7a, un bruit blanc a été rajouté, tel que le rapport signal à bruit soit de 40 dB. On indique, d'une première part, que le canal de transmission choisi selon la fonction de transfert précédemment mentionnée, est relativement sévère en raison de la présence de sa valeur zéro proche et à l'extérieur du cercle unité. Dans un tel cas, le processus récursif mis en oeuvre pour les égaliseurs classiques de type PDFE ou voire EGPR ne peut pas être utilisé de manière satisfaisante, la valeur de l'erreur résiduelle en module étant toujours supérieure à -20 dB, ainsi que représenté sur la figure 7b. On constate que, dans tous les cas, les performances modestes du processus de filtrage CMA sont sensiblement équivalentes à celles obtenues pour le canal à minimum de phase. Toutefois, les performances du dispositif d'égalisation autodidacte prédictive, objet de la présente invention, désigné par égaliseur prédictif sur la figure 7b, sont équivalentes à celles du processus de filtrage CMA. La convergence est malgré tout lente et l'état stable assez médiocre en raison du caractère de sévérité du canal de transmission à maximum de phase précédemment mentionné.

En conclusion, et en référence aux figures 7a et 7b, on indique qu'en présence de trajets multiples, le processus de filtrage EGPR connu de l'art antérieur par prédiction et rétroprédiction s'avère le plus performant pour un canal de transmission à minimum ou à maximum de phase. Cependant, le dispositif d'égalisation autodidacte prédictive, objet de la présente invention, présente un comportement satisfaisant. Pour un canal à minimum de phase, les performances de ce dernier égalent sensiblement celles du processus de filtrage EGPR en régime stationnaire alors que pour un canal à maximum de phase, ces performances apparaissent équivalentes à celles d'un processus de filtrage CMA transverse.

Différents éléments visant à améliorer les performances du dispositif d'égalisation autodidacte prédictive, objet de la présente invention, seront donnés ci-après.

D'une manière générale, de la même manière que pour les structures récursives classiques de type EGPR, un risque d'oscillation intervient lorsque le signal d'entrée de la boucle récursive est sensiblement nul.

Conformément au dispositif, objet de la présente invention, une telle situation ne correspond pas à un minimum global dans la majorité des cas et l'on indique en outre qu'il est possible de limiter la probabilité d'apparition de celle-ci par une initialisation convenable et un choix judicieux des pas d'adaptation des filtres.

Afin d'améliorer le comportement du dispositif d'égalisation autodidacte prédictive, objet de la présente invention, il est également possible de mettre en oeuvre des algorithmes de filtrage permettant d'éviter le risque de convergence de ces derniers vers une solution non désirable stable.

Une première méthode peut consister à ré-initialiser ces filtres , soit systématiquement de manière périodique, soit par évaluation d'un critère spécifique.

De telles méthodes peuvent être utilisées dans le cas où les algorithmes précités présentent une vitesse de convergence importante et lorsque l'on dispose d'une puissance de calcul suffisante.

Une autre solution, plus adaptée, consiste à introduire des contraintes dans les algorithmes d'adaptation du filtrage. A titre d'exemple non limitatif, il est possible d'initialiser la fonction de transfert B(n) du module de filtrage 5 à la valeur zéro, cette valeur d'initialisation correspondant à une situation nominale. Un compromis peut alors être introduit relativement à l'introduction d'un processus d'égalisation ou la non-introduction de ce processus en fonction de la valeur résiduelle du signal d'erreur. Ce mode opératoire consiste à rajouter une composante spécifique dans la fonction coût, cette composante pénalisant la déviation par rapport à une configuration idéale.

Une fonction coût correspondante spécifique pour p=2 et q=2 vérifie la relation :

$$J_{2,2}(n) \;\; = \;\; \left(|y(n)|^2 - R_2^2\right)^2 + \frac{\gamma}{\delta_B}B^H(n)B(n) \, .$$

Dans cette relation, $R_2$ désigne une valeur constante positive, $B^H(n)$ désigne le vecteur transposé conjugué du module de filtrage 5. Le terme rajouté au membre de droite de l'égalité en supplément à la fonction de coût classique obtenue pour p=2 et q=2 a pour effet d'introduire l'apparition d'un terme de rappel à zéro des coefficients du module de filtrage 5, les fonctions de transfert pour l'échantillon de rang n+1, B(n+1) et R(n+1) du module de filtrage 5 et du filtre transverse 61 vérifiant respectivement les relations :

$$B(n+1) \;\; = \;\; (1-\gamma)B(n) + \delta_B y(n)e(n)a(n)S*(n)$$

$$R(n+1) \;\; = \;\; R(n) - \delta_R y(n)e(n)a(n)X*(n)$$

Dans les relations précitées $\delta_B$ et $\delta_R$ sont des pas d'adaptation strictement compris entre 0 et 1 et y désigne un coefficient de l'ordre de $\delta_B/100$. Dans ces mêmes relations, S*(n) et X*(n) désignent respectivement le vecteur conjugué du signal interférent discriminé s(n) et du signal radioélectrique numérisé x(n).

En référence aux figures 3a et 3b, il est indiqué que, dans le cadre de la mise en oeuvre du dispositif d'égalisation autodidacte prédictive, objet de la présente invention, la minimisation du critère de GODARD est sensiblement équivalente au problème de la prédiction des signaux brouilleurs. Le module de filtrage 5 peut donc être interprété comme un filtre d'erreur de prédiction linéaire. Un tel type de filtre est adapté à une modélisation auto-régressive du signal.

En conséquence, et dans le cadre d'une mise en oeuvre d'une telle modélisation, il est possible d'améliorer le processus de filtrage d'erreur de prédiction linéaire en utilisant l'estimation des paramètres du signal au sens des moindres carrés par exemple. L'algorithme ainsi obtenu, désigné par algorithme des moindres carrés rapides ou MCR, consiste alors à estimer les paramètres du signal en utilisant un modèle auto-régressif.

Le processus d'adaptation du module de filtrage 5 constituant le filtre de prédiction B vérifie alors les relations ci-après :

$$M(n) \;\; = \;\; W \cdot M(n-1) + a^2(n)S(n-1)S^H(n-1) \, .$$

$$B(n+1) = B(n) + M^{-1}(n)e(n)a(n)S*(n-1)$$

Dans cette relation, W désigne le facteur d'oubli compris entre 0 et 1 et M(n) désigne l'estimation de la matrice d'autocorrélation du signal d'entrée du module de filtrage 5. On notera que l'adaptation des autres filtres demeure inchangée.

Un test comparatif entre un dispositif d'égalisation autodidacte prédictive mettant en oeuvre un algorithme de

EP 0 944 211 B1

filtrage de type MCR et d'un processus de filtrage selon l'algorithme du gradient stochastique, noté GS, vis-à-vis d'un signal brouilleur en moyenne fréquence, a été réalisé pour un signal brouilleur constitué par un signal d'amplitude à -6 dB du signal utile et modulé par un signal sinusoïdal à une fréquence de 1 kHz avec une excursion en fréquence de 40 kHz. Dans la mise en oeuvre du test précité, le facteur d'oubli W avait pour valeur 0,8 et le filtre B comportait un seul coefficient.

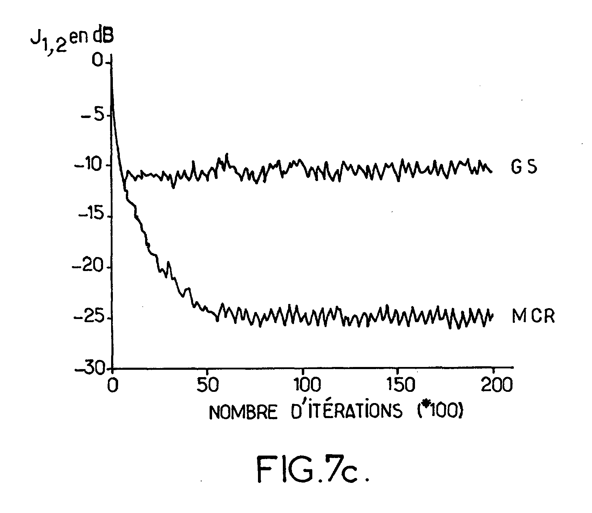

Alors que, dans le cadre du test précité, ainsi que représenté en figure 7c, le processus de filtrage du type CMA transverse présente une erreur résiduelle importante de l'ordre de -10 dB, le dispositif d'égalisation autodidacte prédictive, objet de la présente invention, mis en oeuvre grâce à l'algorithme MCR précité, a permis d'obtenir une valeur résiduelle inférieure à -25 dB.

Alors que, dans le cas du processus de filtrage de type gradient stochastique, l'excursion en fréquence du signal brouilleur est trop importante, ce qui a pour effet de provoquer un décrochage sensible du processus de filtrage, le dispositif, objet de la présente invention, grâce à la mise en oeuvre du processus de filtrage de type MCR, parvient à poursuivre la non-stationnarité correspondante.

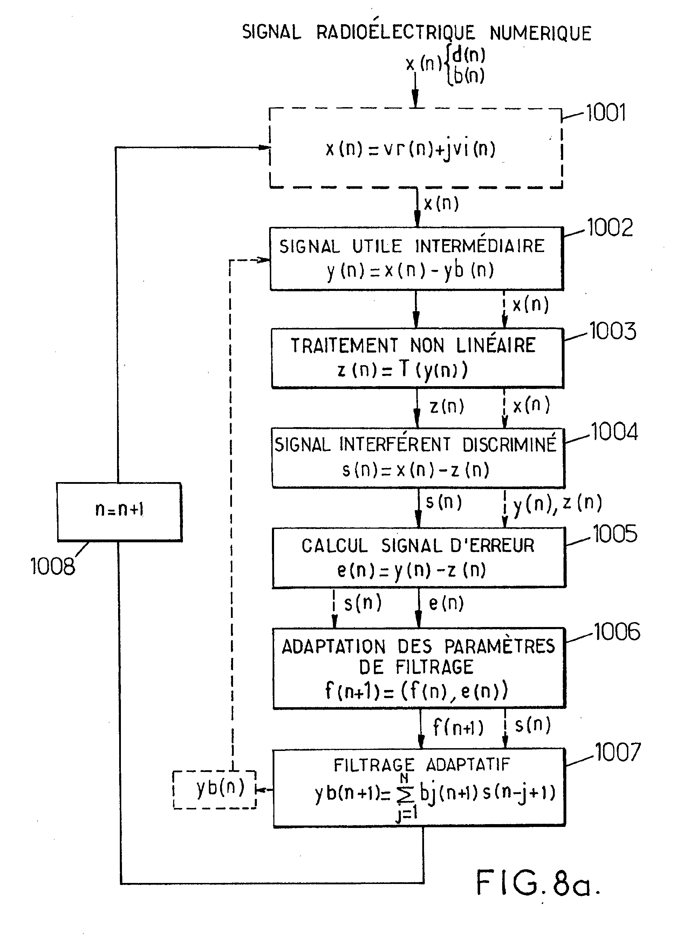

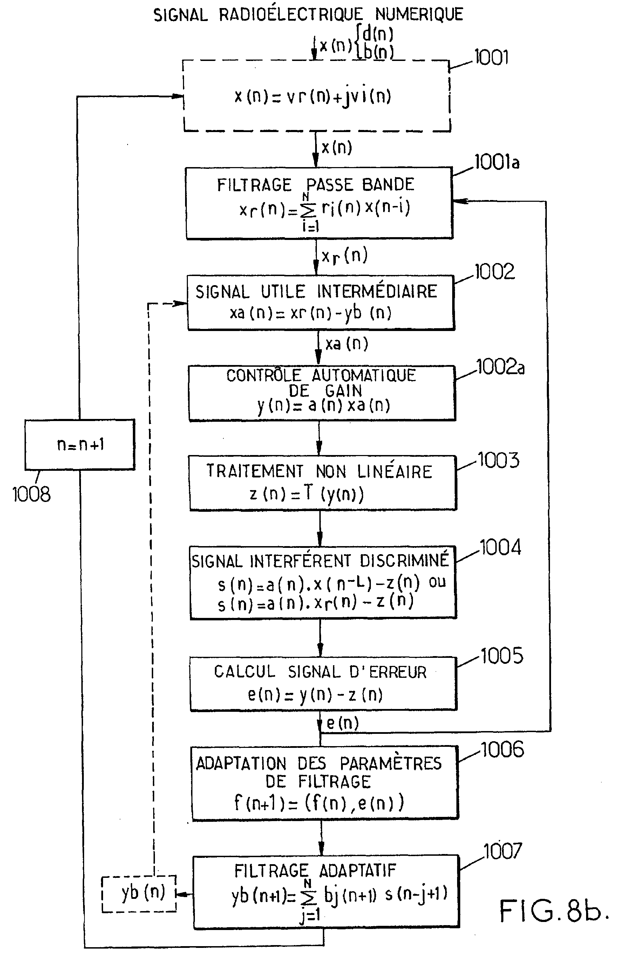

Une description plus détaillée d'un procédé d'égalisation autodidacte prédictive d'un canal de transmission d'un signal radioélectrique transmis ou diffusé, conforme à l'objet de la présente invention, sera maintenant donnée en liaison avec les figures 8a et 8b.

La figure 8a est, de manière non limitative, plus particulièrement destinée à l'illustration de la mise en oeuvre du procédé, objet de la présente invention, conformément au mode de réalisation du dispositif représenté en figure 3a ou 3b par exemple.

En ce qui concerne le signal radioélectrique x(n), on rappelle, ainsi que mentionné précédemment dans la description, que ce signal correspond à un signal à fréquence intermédiaire obtenu suite à un changement de fréquence dans les conditions qui seront explicitées ultérieurement dans la description. Toutefois, afin d'assurer une mise en oeuvre convenable du procédé, objet de la présente invention, le signal à fréquence intermédiaire est soumis à un processus de transformation en un signal analytique complexe permettant d'obtenir une partie réelle $v_r(n)$ et une partie imaginaire $v_i(n)$ représentatives de l'amplitude et de la phase du signal radioélectrique précité. La description ci-après est donnée de manière non limitative relativement à un signal numérique. Pour cette raison, cette transformation étant connue en tant que telle, elle est considérée ne pas faire partie, à proprement parler, du procédé objet de la présente invention. En tout état de cause, le signal radioélectrique numérique disponible suite à cette transformation comporte donc une partie réelle et une partie imaginaire, ainsi que mentionné précédemment. Pour cette raison, cette étape de transformation, référencée 1001, est représentée en pointillé sur la figure 8a et la figure 8b.

Sur l'ensemble des figures 8a et 8b, le transfert d'un signal indiqué en flèches pointillées entre une étape et une étape ultérieure indique simplement la mémorisation d'une valeur de ce signal pour l'échantillon courant de rang n, en vue de l'utilisation dans une étape ou une sous-étape ultérieure.

Ainsi que représenté sur la figure 8a précitée, le procédé, objet de la présente invention, consiste, pour un signal utile à module sensiblement constant perturbé par un signal interférent transmis par le canal de transmission, et dans le but d'engendrer un signal utile estimé z(n) représentatif de ce signal utile, à engendrer, en une étape 1002, un signal utile intermédiaire y(n) obtenu par soustraction, au signal radioélectrique numérisé x(n) sous forme de signal numérique complexe obtenu à l'étape 1001, d'un signal interférent estimé $y_b(n)$ par filtrage adaptatif d'un signal interférent discriminé s(n), lui-même défini comme la différence entre le signal radioélectrique complexe x(n) et le signal utile estimé z(n), avec s(n) = x(n) - z(n). Compte tenu du caractère récursif du filtrage appliqué, on comprend que la valeur calculée $y_b(n)$ du signal interférent estimé pour l'échantillon courant est mémorisée pour l'échantillon précédent et utilisée pour le calcul du signal utile intermédiaire à l'étape 1002, ainsi qu'il sera décrit de manière plus détaillée ci-après dans la description.

L'étape consiste à engendrer un signal utile intermédiaire par soustraction au signal radioélectrique x(n) disponible, suite à la mémorisation précédemment mentionnée, du signal interférent estimé $y_b(n)$ obtenu pour l'échantillon précédent. Cette étape est réalisée par un processus de calcul, portant la référence 1002, réalisant l'opération de soustraction précitée.

Ce signal utile intermédiaire est alors soumis, à l'étape notée 1003, à une opération de traitement non linéaire pour engendrer le signal utile estimé selon la relation :

$$z(n) = T(y(n))$$

où T( ) désigne l'opération non linéaire du traitement appliqué.

L'étape 1003 est suivie d'une étape de calcul du signal interférent discriminé 1004 par une simple soustraction au signal radioélectrique x(n) précité du signal utile estimé z(n), afin d'obtenir le signal interférent discriminé, noté s(n).

Le signal utile estimé z(n), suite à l'opération non linéaire effectuée à l'étape 1003, permet en outre, en une étape 1005, de calculer un signal d'erreur entre le signal utile intermédiaire y(n) et le signal utile estimé z(n). Les étapes 1004 et 1005 peuvent être réalisées soit séquentiellement, soit en mode multitâche, ou même interverties.

Le signal d'erreur e(n) issu de l'étape 1005 précitée permet alors le pilotage du filtrage adaptatif, c'est-à-dire une adaptation, en une étape 1006 des paramètres de filtrage. Ces paramètres de filtrage sont notés f(n) pour le filtrage adaptatif de l'échantillon de rang n du signal interférent discriminé s(n), ces mêmes paramètres de filtrage pour l'échantillon de rang suivant n+1 étant bien entendu notés f(n+1). Ces paramètres sont définis en fonction de la valeur des paramètres pour l'échantillon de rang n, f(n) et de la valeur du signal d'erreur pour l'échantillon e(n) de rang correspondant.

On comprend que, d'une manière non limitative, l'étape notée 1006 sur la figure 8a, peut être réalisée au niveau du module de filtrage 5 lui-même, ainsi qu'il sera décrit ultérieurement dans la description. Les paramètres de filtrage pour l'échantillon de rang suivant n+1 sont alors transmis au filtrage adaptatif à l'étape 1007 pour l'échantillon de rang suivant pour la poursuite continue du processus.

Dans sa forme générale, le filtrage adaptatif réalisé par l'intermédiaire du module de filtrage 5 vérifie la relation :

$$y_b(n+1) \;=\; \sum_{j=1}^{N} b_j(n+1)s(n+1-j)\,.$$

Dans cette relation, on indique que $b_j(n+1)$ indique la valeur du coefficient de rang j pour le filtrage adaptatif réalisé par le module de filtrage 5, le filtrage étant réalisé à partir d'un module de filtrage comportant N coefficients de filtrage. On notera en particulier que dans le cadre de la mise en oeuvre du processus de filtrage adaptatif à l'étape 1007, une mémorisation sur les n-1 à n-N échantillons successifs du signal interférent discriminé s(n) est effectuée afin de permettre la réalisation de l'opération de filtrage. Cette mémorisation est inhérente au mode de filtrage réalisé.

Le processus de filtrage adaptatif réalisé à l'étape 1007 permet d'obtenir en fait le signal interférent estimé $y_b(n+1)$ précédemment décrit dans la description. En ce qui concerne la valeur du signal interférent estimé $y_b(n)$ pour l'échantillon courant, celle-ci est mémorisée à l'instant d'échantillonnage précédent et lue pour la mise en oeuvre de l'étape 1002. Ces opérations sont représentées en pointillé pour cette raison sur la figure 8a.

Suite à l'adaptation des paramètres de filtrage 1006, le processus est répété par répétition de l'ensemble des étapes précédentes pour l'échantillon de rang suivant n+1, répétition désignée par la notation n=n+1 à l'étape 1008 de la figure 8a et ainsi pour tout échantillon successif.

On comprend en particulier que, pour la convergence du filtrage adaptatif réalisé à l'étape 1007, le signal d'erreur e(n) est minimisé, ce qui permet d'obtenir un signal utile estimé z(n) très proche du signal utile intermédiaire y(n). Le signal utile estimé z(n) est alors utilisé pour calculer à l'étape 1004 le signal interférent discriminé en raison de la valeur convergente de ce signal vers le signal interférent estimé $y_b(n)$.

Le procédé, objet de la présente invention, peut également être mis en oeuvre de manière particulièrement avantageuse, ainsi que représenté en figure 8b, en soumettant au moins le signal utile intermédiaire à une correction d'amplitude, au moyen par exemple d'un contrôle automatique de gain piloté par le signal d'erreur. Une telle opération consiste alors à intercaler entre l'étape 1002 et l'étape 1003 de la figure 8a, ainsi que représenté en figure 8b, l'étape de contrôle automatique de gain précitée, référencée 1002a, laquelle consiste à pondérer le signal utile intermédiaire obtenu à l'étape 1002 par un coefficient noté a(n), la valeur de ce coefficient pour chaque échantillon étant pilotée en fonction du signal d'erreur e(n). Pour les mêmes raisons que relativement au mode de réalisation représenté en figure 4 ou en figure 5, le signal utile intermédiaire est noté $x_a(n)$ avant application du contrôle automatique de gain afin de conserver la notation y(n) de ce même signal après traitement par contrôle automatique de gain lors de l'application du traitement non linéaire à l'étape 1003.

En outre, ainsi que représenté sur la même figure 8b, le procédé, objet de la présente invention, peut consister également, suite à l'étape 1001, lorsque celle-ci est mise en oeuvre, mais préalablement à l'étape 1002, à soumettre le signal radioélectrique x(n) à une étape de correction fréquentielle par un filtrage fonction du canal de transmission, ce filtrage étant réalisé en fonction du signal d'erreur e(n), ainsi que représenté sur la figure 8b. On rappelle que ce filtrage est réalisé par un filtrage transverse adapté sur le même critère que le filtrage adaptatif réalisé à l'étape 1007. Ce filtrage peut être introduit dans le cas de l'existence de signaux interférents peu prédictibles, la fréquence centrale de ce filtrage correspondant à la fréquence la plus probable de ces signaux interférents.

Bien entendu, les étapes précédentes 1002a et 1001a peuvent être réalisées et mises en oeuvre de manière concomitante. Dans un tel cas, le procédé, objet de la présente invention, peut être mis en oeuvre grâce au dispositif correspondant représenté en figure 5.

Dans le cadre d'une telle mise en oeuvre, les relations correspondant aux différentes étapes de la figure 8b, ces relations étant relatives aux différents signaux mis en oeuvre, sont données ci-après :

- <u>étape 1001a</u> :

$$x_r(n) = \sum_{i=0}^{K-1} r_i(n)x(n-i)$$

filtrage réalisé au moyen d'un filtre à K coefficients $r_1(n)$.

- <u>étape 1002a</u> :

$$y(n) = a(n)\{x_r(n) - y_b(n)\} = a(n)x_a(n)$$

$x_a(n)$ désigne le signal utile intermédiaire avant contrôle automatique de gain.

- <u>étape 1004 :</u>

$$s(n) = a(n).x(n-L) - T(y(n))$$

ou

$$s(n) = a(n).x_r(n) - T(y(n))$$

avec

$$z(n) = T(y(n))$$

- <u>étape 1005 :</u>

$$e(n) = y(n) - T(y(n))$$

- <u>étape 1006 :</u>

$$f(n+1)\begin{cases} a(n+1) = a(n) - \delta_a e(n)x_a^*(n) \\ B(n+1) = B(n) + \delta_b e(n)a(n)S^*(n-1) \\ R(n+1) = R(n) - \delta_R e(n)a(n)X^*(n) \end{cases}$$

$$r_L(n) = 1$$

- <u>étape 1007</u>

$$y_b(n+1) = \sum_{j=1}^{N} b_j(n+1)s(n-j+1)$$

filtrage réalisé au moyen d'un filtre à N coefficients $b_j(n+1)$.

Dans les relations précédentes, on indique que les paramètres de contrôle automatique de gain a(n), de fonction de transfert du filtrage de type adaptatif de l'étape 1007, B(n), et de filtrage fonction du canal à l'étape 1001a, R(n), sont définis de manière itérative pour l'échantillon de rang suivant n+1 en fonction de la valeur correspondante pour l'échantillon de rang courant n à partir de pas d'adaptation $\delta_a$, $\delta_B$ et $\delta_R$, coefficients d'atténuation strictement compris entre 0 et 1, la notation * des signaux correspondants désignant le signal conjugué d'un signal complexe d'origine.

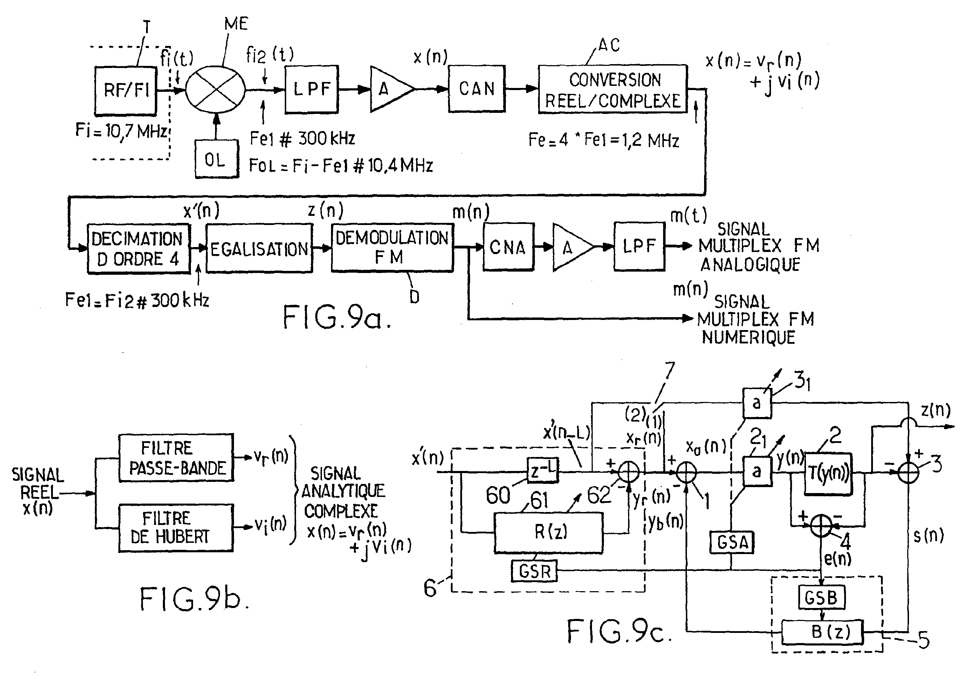

Un mode de réalisation préférentiel d'un démodulateur numérique FM comportant un dispositif d'égalisation autodidacte prédictive conforme à l'objet de la présente invention, mettant en oeuvre le procédé précédemment décrit en liaison avec les figures 8a et 8b, est maintenant décrit en liaison avec les figures 9a à 9c.

De manière classique, le démodulateur numérique comprend un dispositif transposeur T permettant de délivrer un signal à fréquence intermédiaire Fi=10,7 MHz. Ce signal est soumis à une opération de changement de fréquence par un mélangeur ME à partir d'un oscillateur local OL pour délivrer un signal analogique basse fréquence, noté $f_{i2}(t)$. Ce signal est soumis à un filtrage de type passe-bas, noté LPF, pour éliminer les hautes fréquences engendrées par le mélangeur ME et amplifié avec un gain A, puis soumis à une conversion analogique numérique par le module CAN. Le module précité délivre le signal radioélectrique numérisé x(n) précédemment mentionné dans la description. Ce signal est soumis à un traitement pour engendrer le signal analytique complexe, par un module AC de conversion réel/complexe, pour délivrer le signal radioélectrique numérique comportant les parties réelle et imaginaire, ainsi que mentionné relativement à l'étape de pré-traitement représentée aux figures 8a et 8b. Le signal ainsi obtenu est alors soumis à un processus de décimation d'ordre 4, ce signal après décimation, et noté x'(n) pour cette raison, étant soumis au processus d'égalisation au moyen d'un dispositif d'égalisation autodidacte prédictive, référencé Egalisation, tel que décrit précédemment dans la description. Le signal utile estimé, après égalisation, z(n), est alors soumis à la démodulation FM numérique par le module de démodulation D.

Les opérations classiques par conversion numérique analogique, amplification adaptée A, puis filtrage passe-bas, permettent de délivrer un signal multiplex FM analogique utilisable en réception, le signal multiplex FM numérique disponible en sortie du bloc D pouvant lui-même être utilisé. Ces éléments ne seront pas décrits en détail car ils correspondent à des éléments relatifs à l'état de la technique.

En ce qui concerne le module de conversion réel/complexe AC, on indique que celui-ci peut être réalisé, ainsi que représenté en figure 9b, à partir d'un d'une transformation de HILBERT recevant le signal radioélectrique numérisé x(n) et permettant d'obtenir une partie réelle $v_r(n)$ et une partie imaginaire $v_i(n)$. Une description plus détaillée de ce type de transformation n'est pas nécessaire, car ces éléments correspondent à des éléments connus de l'état de la technique.

Enfin, en ce qui concerne le dispositif d'égalisation autodidacte prédictive connecté en sortie du module de décimation d'ordre 4, celui-ci peut correspondre au mode de réalisation du dispositif représenté en figure 5, par exemple.

Par ailleurs, un mode de réalisation particulier correspondant est représenté en figure 9c. Afin de limiter le nombre d'instructions pour chaque échantillon, l'algorithme de calcul et de réactualisation des paramètres de filtrage f(n+1) qui peut être mis en oeuvre est un algorithme de type CMA(2,2) étendu, lequel est résumé de la façon ci-après :

$$x_r(n) = \sum_{i=0}^{L-1} r_i(n)x'(n-i)$$

$$y(n) = a(n)\{x_r(n) - y_b(n)\} = a(n)x_a(n)$$

$$s(n) = a(n).x'(n-L) - y(n)(2 - |y(n)|^2)$$

avec

$$T(y(n)) = y(n)(2 - |y(n)|^2)$$

$$e(n) = (|y(n)|^2 - 1)y(n)$$

$$y_b(n+1) = \sum_{J=1}^{N} b_J(n+1)s(n+1-j)$$

Mise à jour des filtres :

$$a(n+1) = a(n) - \delta_a e(n)x_a^{\bullet}(n)$$

$$B(n+1) = B(n) + \delta_B e(n)a(n)S^{\bullet}(n-1)$$

$$R(n+1) = R(n) - \delta_R e(n)a(n)X^{'\bullet}(n)$$

$$r_L(n) = 1$$

Dans le mode de réalisation précité, on indique que tous les filtres sont complexes à l'exception de a(n), valeur de gain ajustable représentée par un nombre réel positif et se décomposent en conséquence en partie réelle et partie imaginaire. Les modules GS R, GS A et GS B correspondent à des modules d'adaptation inclus dans les filtres adaptatifs correspondants permettant d'adapter la valeur des paramètres de filtrage f(n+1) tel que mentionné précédemment dans la description en relation avec la figure 9c. En ce qui concerne le contrôle automatique de gain, l'adaptation est réalisée au niveau du module à gain ajustable $2_1$ représenté sur la figure 9c, les valeurs adaptées de gain pouvant alors être transmises à tous les modules utilisés par simple duplication de ces valeurs adaptées et mémorisation au niveau de chaque module à gain ajustable.

Une étude de complexité a montré que, pour la mise en oeuvre du procédé, objet de la présente invention et du dispositif correspondant représenté en figure 9c, grâce à l'algorithme CMA étendu précité, cette mise en oeuvre nécessite environ 220 opérations pour le mode de réalisation considéré. La complexité de calcul est d'ordre 16(N+K) où N désigne le nombre de coefficients du filtre du module de filtrage 5, portant la référence 50 sur la figure 9c, et K le nombre de coefficients du filtre 61 transverse représenté sur cette figure. On indique que la complexité de calcul peut être diminuée grâce à la mise en oeuvre d'un processus numérique de traitement de signal. Elle peut alors être ramenée à une valeur de l'ordre de 8(N+K).

### Revendications

1. Dispositif d'égalisation autodidacte prédictive d'un canal de transmission d'un signal radioélectrique x(n), lequel consiste en un signal utile perturbé par un signal interférent transmis par ce canal de transmission, **caractérisé en ce que**, pour un signal utile à module sensiblement constant, ledit dispositif comprend au moins une boucle récursive d'estimation d'un signal utile estimé z(n) comportant :

   - des premiers moyens soustracteurs recevant ledit signal radioélectrique x(n) et un signal interférent estimé yb(n), délivré par la boucle récursive, et délivrant un signal utile intermédiaire y(n) ;
   - des moyens de traitement non linéaire recevant ledit signal utile intermédiaire y(n) et délivrant ledit signal utile estimé z(n), lesdits moyens de traitement non linéaire présentant, pour un signal utile à module sensiblement constant de valeur b déterminée, une fonction du type :

$$T\big(y(n)\big) = b\,\frac{y(n)}{|y(n)|} \qquad ;$$

- des deuxièmes moyens soustracteurs recevant ledit signal radioélectrique $x(n)$ et ledit signal utile estimé $z(n)$ et délivrant un signal interférent discriminé $s(n)$ ;
- des moyens de calcul d'un signal d'erreur $e(n)$ entre ledit signal utile intermédiaire $y(n)$ et ledit signal utile estimé, $z(n)$ ;
- des moyens de filtrage adaptatif formés par un filtre linéaire adapté au moyen d'une fonction coût vérifiant la relation :

$$J_{p.q} = \mathrm{E}\big(|\,y(n)\,|^{p} - (b)^{p}\,|^{q}\,\big)$$

relation dans laquelle p et q sont des entiers positifs, lesdits moyens de filtrage adaptatif recevant ledit signal interférent discriminé $s(n)$, étant pilotés par ledit signal d'erreur $e(n)$ et délivrant ledit signal interférent estimé auxdits premiers moyens soustracteurs,
ledit dispositif comprenant en outre, pour un signal interférent canal adjacent peu prédictible, en amont de ladite boucle récursive, un moyen de filtrage transverse piloté par ledit signal d'erreur, ledit moyen de filtrage transverse recevant ledit signal électrique $x(n)$ et délivrant un signal radioélectrique corrigé $x_r(n)$ à ladite boucle récursive, lesdits moyens de filtrage adaptatif et de filtrage transverse minimisant la même fonction coût, le moyen de filtrage transverse comportant une valeur particulière d'un de ses coefficients permettant d'éviter la présence de minima globaux non désirables.

2. Dispositif selon la revendication 1, **caractérisé en ce que**, pour p=1 et q=2, ladite fonction coût vérifie la relation :

$$J_{1,2} = E\big(|\,y(n) - z(n)\,|^{2}\,\big) = E\big(|s(n) - y_b(n)\,|^{2}\,\big)$$

ledit filtrage adaptatif permettant, pour une minimisation de cette fonction coût permettant l'obtention d'une valeur minimale du signal d'erreur entre le signal utile intermédiaire $y(n)$ et le signal utile estimé $z(n)$, une minimisation correspondante de l'erreur de filtrage entre le signal interférent discriminé et le signal interférent estimé.

3. Dispositif selon l'une des revendications 1 à 2, **caractérisé en ce que** ce dispositif comporte en outre un moyen à gain ajustable, placé en amont des moyens de traitement non linéaire, et opérant en contrôle automatique de gain à partir du signal d'erreur.

4. Dispositif selon la revendication 3, **caractérisé en ce que** ledit moyen de filtrage transverse comporte au moins

- un circuit retardateur de $L$ échantillons dudit signal radioélectrique $x(n)$ délivrant un signal radioélectrique retardé $x(n\text{-}L)$ ;
- un moyen de filtrage linéaire piloté par ledit signal d'erreur $e(n)$ et recevant ledit signal radioélectrique $x(n)$, ce moyen de filtrage linéaire délivrant un signal radioélectrique filtré, $y_r(n)$ ;
- des moyens soustracteurs auxiliaires recevant le signal radioélectrique retardé $x(n\text{-}L)$ et le signal radioélectrique filtré $y_r(n)$ et délivrant le signal radioélectrique corrigé $x_r(n)$.

5. Dispositif selon la revendication 4, **caractérisé en ce que** l'entrée desdits deuxièmes moyens soustracteurs recevant ledit signal radioélectrique est connectée en entrée de la boucle récursive par l'intermédiaire d'un commutateur double voie, une première voie de ce commutateur double voie étant connectée en sortie desdits moyens soustracteurs auxiliaires et une deuxième voie de ce commutateur double voie étant connectée en entrée des moyens soustracteurs auxiliaires recevant ledit signal radioélectrique retardé $x(n\text{-}L)$.

6. Procédé d'égalisation autodidacte prédictive d'un canal de transmission d'un signal radioélectrique $x(n)$, lequel consiste en un signal utile perturbé par un signal interférent transmis par ce canal de transmission, **caractérisé en ce que**, pour un signal utile à module sensiblement constant et dans le but d'engendrer un signal utile estimé représentatif de ce signal utile, ledit procédé consiste au moins :

a)- à engendrer un signal utile intermédiaire par soustraction audit signal radioélectrique d'un signal interférent estimé, ce signal utile intermédiaire étant représentatif de ce signal utile ;

b)- à soumettre ce signal utile intermédiaire à un traitement non linéaire pour engendrer ledit signal utile estimé, ledit traitement non linéaire comprenant l'application d'une fonction du type :

$$T(y(n)) = b \frac{y(n)}{|y(n)|} \quad ;$$

c)- à engendrer ledit signal interférent discriminé, par soustraction audit signal radioélectrique dudit signal utile estimé ;

d)- à engendrer un signal d'erreur, par soustraction audit signal utile intermédiaire dudit signal utile estimé ;

e)- à engendrer ledit signal interférent estimé par filtrage adaptatif du signal interférent discriminé, au moyen d'un filtre linéaire adapté au moyen d'une fonction coût vérifiant la relation :

$$J_{p,q} = E\left(\left|y(n)\right|^p - (b)^p \right|^q \right) ;$$

f)- à soumettre ledit signal radioélectrique x(n), pour un signal interférent canal adjacent peu prédictible, à un filtrage transverse, le filtrage adaptatif et le filtrage transverse étant pilotés par ledit signal d'erreur et minimisant la même fonction coût, le filtrage transverse comportant une valeur particulière d'un coefficient de filtrage permettant d'éviter la présence de minima globaux non désirables.

7. Procédé selon la revendication 6, **caractérisé en ce que**, pour un signal radioélectrique numérique, ladite étape de filtrage adaptatif du signal interférent discriminé est pilotée à partir dudit signal d'erreur, ce qui permet d'adapter la valeur des coefficients du filtrage adaptatif de l'échantillon courant à l'échantillon suivant.

8. Procédé selon la revendication 6 ou 7, **caractérisé en ce que**, suite à l'étape a) mais préalablement à l'étape b), ledit procédé consiste en outre à soumettre au moins ledit signal utile intermédiaire à une correction d'amplitude au moyen d'un contrôle automatique de gain piloté par ledit signal d'erreur.

9. Procédé selon la revendication 8, **caractérisé en ce que**, préalablement à l'étape a), celui-ci consiste en outre à soumettre ledit signal radioélectrique à une étape de correction fréquentielle, par filtrage fonction du canal de transmission.

10. Démodulateur FM numérique d'un signal radioélectrique diffusé, **caractérisé en ce qu'**il comporte au moins, outre un module de transposition (T), un module de changement de fréquence (ME) associé à un oscillateur local (OL), un filtre passe-bas (LPF), un module amplificateur (A) et un convertisseur analogique-numérique (CAN), successivement, délivrant un signal radioélectrique numérique,

- un module (AC) de conversion de ce signal radioélectrique numérique en un signal analytique complexe ;
- un module de décimation de ce signal analytique complexe, délivrant à partir de ce signal analytique complexe un signal analytique complexe sous-échantillonné ;
- un module d'égalisation autodidacte prédictive, selon l'une des revendications 1 à 5, délivrant un signal utile estimé z(n) ;
- un module démodulateur (D) délivrant à partir du signal utile estimé un signal utile démodulé.

**Patentansprüche**

1. Einrichtung zur adaptiven, vorhersagenden Entzerrung eines Übertragungskanals für ein Rundfunksignal x(n), das aus einem durch ein Interferenzsignal gestörten Nutzsignal besteht, das über diesen Übertragungskanal übertragen wird, **dadurch gekennzeichnet, dass** die Einrichtung für ein Nutzsignal mit im Wesentlichen konstantem Betrag mindestens eine Rekursiv-Schleife zum Schätzen eines geschätzten Nutzsignals z(n) umfasst, aufweisend:

- erste Subtrahier-Mittel, die das Rundfunksignal x(n) und ein geschätztes Interferenzsignal yb(n) empfangen, das von der Rekursiv-Schleife ausgegeben wird, und die ein intermediäres Nutzsignal y(n) ausgeben;
- Mittel zur nichtlinearen Verarbeitung, die das intermediäre Nutzsignal y(n) empfangen und das geschätzte Nutzsignal z(n) ausgeben, wobei die Mittel zur nichtlinearen Verarbeitung für ein Nutzsignal mit im Wesentlichen konstantem Betrag des vorbestimmten Werts b eine Funktion des folgenden Typs aufweisen:

$$T(y(n)) = b \frac{y(n)}{|y(n)|}$$

- zweite Subtrahier-Mittel, die das Rundfunksignal x(n) und das geschätzte Nutzsignal z(n) empfangen und ein diskriminiertes Interferenzsignal s(n) ausgeben;
- Mittel zum Berechnen eines Fehlersignals e(n) zwischen dem intermediären Nutzsignal y(n) und dem geschätzten Nutzsignal z(n);
- Mittel zum adaptiven Filtern, die durch einen linearen Filter ausgebildet sind, der mittels einer Kostenfunktion adaptiert ist, die folgende Relation überprüft:

$$J_{p.q} = E\left(\left|\,|y(n)|^p - (b)^p\,\right|^q\,\right)$$

in der p und q positive ganze Zahlen sind,
wobei die Mittel zum adaptiven Filtern das diskriminierte Interferenzsignal s(n) empfangen, von dem Fehlersignal e(n) gesteuert werden und das geschätzte Interferenzsignal an die ersten Subtrahier-Mittel ausgeben,
wobei die Einrichtung des Weiteren bei einem benachbarten, schlecht vorhersagbaren Interferenzkanalsignal vor der Rekursiv-Schleife umfasst: ein Mittel zum transversalen Filtern, das durch das Fehlersignal gesteuert wird, wobei das Mittel zum transversalen Filtern das elektrische Signal x(n) empfängt und ein korrigiertes Rundfunksignal $x_r(n)$ an die Rekursiv-Schleife ausgibt, wobei die Mittel zum adaptiven Filtern und zum transversalen Filtern die gleiche Kostenfunktion minimieren, wobei das Mittel zum transversalen Filtern einen bestimmten Wert eines seiner Koeffizienten aufweist, der es ermöglicht, das Vorhandensein von unerwünschten globalen Minima zu vermeiden.

2. Einrichtung nach Anspruch 1, **dadurch gekennzeichnet, dass** für p=1 und q=2 die Kostenfunktion folgende Relation überprüft:

$$J_{1,2} = E\left(\left|\,y(n) - z(n)\,\right|^2\,\right) = E\left(\left|s(n) - y_b(n)\,\right|^2\,\right)$$

wobei das adaptive Filtern bei einer Minimierung der Kostenfunktion, die den Erhalt eines Minimalwerts des Fehlersignals zwischen dem intermediären Nutzsignal y(n) und dem geschätzten Nutzsignal Z(n) ermöglicht, eine entsprechende Minimierung des Filterfehlers zwischen dem diskriminierten Interferenzsignal und dem geschätzten Interferenzsignal ermöglicht.

3. Einrichtung nach einem der Ansprüche 1 bis 2, **dadurch gekennzeichnet, dass** die Einrichtung des Weiteren ein regulierbares Verstärkungsmittel umfasst, das vor den Mitteln zur nichtlinearen Verarbeitung angeordnet ist und mit automatischer Steuerung der Verstärkung ausgehend vom Fehlersignal arbeitet.

4. Einrichtung nach Anspruch 3, **dadurch gekennzeichnet, dass** das Mittel zum transversalen Filtern mindestens umfasst:

- eine Verzögerungsschaltung von L Abtastwerten des Rundfunksignals x(n), die ein verzögertes Rundfunksignal x(n-L) ausgibt;
- ein Mittel zum linearen Filtern, das durch das Fehlersignal e(n) gesteuert wird und das Rundfunksignal x(n) empfängt, wobei dieses Mittel zum linearen Filtern ein gefiltertes Rundfunksignal $y_r(p)$ ausgibt;
- Hilfssubtrahier-Mittel, die das verzögerte Rundfunksignal x(n-L) und das gefilterte Rundfunksignal $y_r(n)$ empfangen und das korrigierte Rundfunksignal $x_r(n)$ ausgeben.

**5.** Einrichtung nach Anspruch 4, **dadurch gekennzeichnet, dass** der Eingang der zweiten Subtrahier-Mittel, der das Rundfunksignal empfängt, mit dem Eingang der Rekursiv-Schleife mittels eines Zweiwege-Schalters verbunden ist, wobei ein erster Weg dieses Zweiwege-Schalters mit dem Ausgang der Hilfssubtrahier-Mittel verbunden ist und ein zweiter Weg dieses Zweiwege-Schalters mit dem Eingang der Hilfssubtrahier-Mitteln verbunden ist, die das verzögerte Rundfunksignal x(n-L) empfangen.

**6.** Verfahren zur adaptiven, vorhersagenden Entzerrung eines Übertragungskanals für ein Rundfunksignal x(n), das aus einem durch ein Interferenzsignal gestörten Nutzsignal besteht, das über diesen Übertragungskanal übertragen wird, **dadurch gekennzeichnet, dass** das Verfahren für ein Nutzsignal mit im Wesentlichen konstantem Betrag und mit dem Ziel, ein geschätztes Nutzsignal, das repräsentativ für dieses Nutzsignal ist, zu erzeugen, mindestens besteht aus:

a)- Erzeugen eines intermediären Nutzsignals durch Subtraktion des Rundfunksignals von einem geschätzten Interferenzsignal, wobei das intermediäre Nutzsignal repräsentativ für das Nutzsignal ist;
b)- Nichtlineares Verarbeiten dieses intermediären Nutzsignals zum Erzeugen des geschätzten Nutzsignals, wobei die nichtlineare Verarbeitung die Anwendung einer Funktion des folgenden Typs umfasst:

$$T(y(n)) = b \frac{y(n)}{|y(n)|}$$

c)- Erzeugen des diskriminierten Interferenzsignals durch Subtraktion des Rundfunksignals vom geschätzten Nutzsignal;
d)- Erzeugen eines Fehlersignals durch Subtraktion des intermediären Nutzsignals vom geschätzten Nutzsignal;
e)- Erzeugen des geschätzten Interferenzsignals durch adaptives Filtern des diskriminierten Interferenzsignals mittels eines linearen Filters, der mittels einer Kostenfunktion adaptiert ist, die folgende Relation überprüft:

$$J_{p.q} = E\left(\left| |y(n)|^p - (b)^p \right|^q\right)$$

f)- Transversales Filtern des Rundfunksignals x(n) bei einem benachbarten, schlecht vorhersagbaren Interferenzkanalsignal, wobei das adaptive Filtern und das transversale Filtern vom Fehlersignal gesteuert werden und die gleiche Kostenfunktion minimieren, wobei das transversale Filtern einen bestimmten Wert eines Filterkoeffizienten aufweist, der es ermöglicht, das Vorhandensein von unerwünschten globalen Minima zu vermeiden.

**7.** Verfahren nach Anspruch 6, **dadurch gekennzeichnet, dass** für ein digitales Rundfunksignal der Abschnitt des adaptiven Filterns des diskriminierten Interferenzsignals ausgehend vom Fehlersignal gesteuert wird, was es ermöglicht, den Wert der Koeffizienten des adaptiven Filterns des aktuellen Abtastwerts an den folgenden Abtastwert anzupassen.

**8.** Verfahren nach Anspruch 6 oder 7, **dadurch gekennzeichnet, dass** nach Abschnitt a), aber vor Abschnitt b) das Verfahren des Weiteren darin besteht, mindestens das intermediäre Nutzsignal einer Korrektur der Amplitude mittels einer automatischen Steuerung der Verstärkung zu unterziehen, die vom Fehlersignal gesteuert wird.

**9.** Verfahren nach Anspruch 8, **dadurch gekennzeichnet, dass** dieses vor Abschnitt a) des Weiteren darin besteht, das Rundfunksignal einem Frequenzkorrekturabschnitt durch übertragungskanalabhängiges Filtern zu unterziehen.

**10.** Digitaler FM-Demodulator für ein übertragenes Rundfunksignal, **dadurch gekennzeichnet, dass** es nacheinander mindestens umfasst: neben einem Umsetzungsmodul (T), ein Frequenzänderungsmodul (ME), das mit einem lokalen Oszillator (OL) verbunden ist, einen Tiefpassfilter (LPF), ein Verstärkermodul (A) und einen Analog-Digital-Umsetzer (CAN), die ein digitales Rundfunksignal ausgeben,

- ein Modul (AC) zum Umwandeln dieses digitalen Rundfunksignals in ein komplexes Analytiksignal;
- ein Modul zum Dezimieren dieses komplexen Analytiksignals, das ausgehend von diesem komplexen Analytiksignal ein komplexes unterabgetastetes Analytiksignal ausgibt;

- ein Modul zur adaptiven, vorhersagenden Entzerrung nach einem der Ansprüche 1 bis 5, das ein geschätztes Nutzsignal z(n) ausgibt;
- ein Demodulator-Modul (D), das ausgehend vom geschätzten Nutzsignal ein demoduliertes Nutzsignal ausgibt.

**Claims**

1.  Device for autodidactic, predictive equalisation of a channel for transmitting a radio signal *x(n)* comprising a useful signal subjected to interference by an interference signal transmitted by this transmission channel, **characterised in that**, for a signal with a substantially constant modulus, said device comprises at least one recursive loop for estimating an estimated useful signal *z(n)* comprising:

    - first subtraction means receiving said radio signal *x(n)* and an estimated interference signal *yb(n)* forwarded by the recursive loop and outputting an intermediate useful signal *y(n)*;
    - non-linear processing means receiving said intermediate useful signal y*(n)* and outputting said estimated useful signal *z(n)*, said non-linear processing means using, for a useful signal with a substantially constant modulus with a given value b, a function of the type:

    $$T(y(n)) = b \, \frac{y(n)}{|y(n)|} \quad ;$$

    - second subtraction means receiving said radio signal *x(n)* and said estimated useful signal *z(n)* and outputting a discriminated interference signal *s(n)*;
    - means for calculating an error signal *e(n)* between said intermediate useful signal *y(n)* and said estimated useful signal *z(n)*;
    - adaptive filtering means in the form of a linear filter adapted on the basis of a cost function verifying the equation:

    $$J_{p,q} = E\left( \left| |y(n)|^{p} - (b)^{p} \right|^{q} \right)$$

    in which equation p and q are positive integers, said adaptive filtering means receiving said discriminated interference signal *s(n)* being controlled by said error signal *e(n)*, and outputting said estimated interference signal to said first subtraction means, said device further comprising, for an adjacent channel interference signal that is poorly predictable, disposed upstream of said recursive loop, a transverse filtering means controlled by said error signal, said transverse filtering means receiving said electrical signal *x(n)* and outputting a corrected radio signal *x_r(n)* to said recursive loop, said adaptive filtering means and transverse filtering means minimising the same cost function, the transverse filtering means having a specific value of one of its coefficients which enables the presence of non-desirable global minima to be avoided.

2.  Device as claimed in claim 1, **characterised in that**, where p = 1 and q = 2, said cost function verifies the equation:

    $$J_{1,2} = E\left( \left| y(n) - z(n) \right|^{2} \right) = E\left( \left| s(n) - y_b(n) \right|^{2} \right)$$

    said adaptive filtering enabling, for a minimisation of this cost function which enables a minimum value of the error signal between the intermediate useful signal *y(n)* and the estimated useful signal *z(n)* to be obtained, a corresponding minimisation of the filtering error between the discriminated interference signal and the estimated interference signal.

3.  Device as claimed in one of claims 1 to 2, **characterised in that** this device further comprises a means with adjustable gain, disposed upstream of the non-linear processing means and operating in automatic gain control mode on the basis of the error signal.

4.  Device as claimed in claim 3, **characterised in that** said transverse filtering means comprises at least:

- a delay circuit with $L$ samples of said radio signal $x(n)$ outputting a delayed radio signal $x(n-L)$;
- a linear filtering means controlled by said error signal $e(n)$ and receiving said radio signal $x(n)$, this linear filtering means outputting a filtered radio signal $y_r(n)$;
- auxiliary subtraction means receiving the delayed radio signal $x(n-L)$ and the filtered radio signal $y_r(n)$ and outputting the corrected radio signal $x_r(n)$.

5. Device as claimed in claim 4, **characterised in that** the input of said second subtraction means receiving said radio signal is connected to the input of the recursive loop via a two-channel switch, a first channel of this two-channel switch being connected to the output of said auxiliary subtraction means and a second channel of the two-channel switch being connected to the input of the auxiliary subtraction means receiving said delayed radio signal $x(n-L)$.

6. Method of autodidactic, predictive equalisation of a transmission channel for a radio signal $x(n)$ comprising a useful signal subjected to interference by an interference signal transmitted by this transmission channel, **characterised in that**, for a useful signal with a substantially constant modulus and with a view to generating an estimated useful signal representative of this useful signal, said method comprises at least:

   a) - generating an intermediate useful signal by subtracting an estimated interference signal from said radio signal, this intermediate useful signal being representative of this useful signal;
   b) - subjecting this intermediate useful signal to non-linear processing in order to generate said estimated useful signal, said non-linear processing comprising applying a function of the type:

$$T(y(n)) = b\,\frac{y(n)}{|y(n)|}\quad;$$

   c) generating said discriminated interference signal by subtracting said estimated useful signal from said radio signal;
   d) generating a signal error by subtracting said estimated useful signal from said intermediate useful signal;
   e) generating said estimated interference signal by adaptively filtering the discriminated interference signal by means of a linear filter adapted using a cost function verifying the equation:

$$J_{p,q} = \mathrm{E}\!\left(\left|\,|y(n)|^{p} - (b)^{p}\,\right|^{q}\right)\quad;$$

   f) subjecting said radio signal $x(n)$, for an adjacent channel interference signal that is poorly predictable, to transverse filtering, the adaptive filtering and transverse filtering being controlled by said error signal and minimising the same cost function, the transverse filtering having a specific value of a filtering coefficient which enables the presence of non-desirable global minima to be avoided.

7. Method as claimed in claim 6, **characterised in that**, for a digital radio signal, said step of adaptive filtering of the discriminated interference signal is controlled on the basis of said error signal, which enables the value of the adaptive filtering coefficients of the current sample to be adapted to the following sample.

8. Method as claimed in claim 6 or 7, **characterised in that**, following step a) but prior to step b), said method further comprises subjecting at least said intermediate useful signal to an amplitude correction by means of an automatic gain control controlled by said error signal.

9. Method as claimed in claim 8, **characterised in that**, prior to step a), it further comprises subjecting said radio signal to a frequency correction step by means of filtering as a function of the transmission channel.

10. Digital FM demodulator for a broadcast radio signal, **characterised in that** it comprises at least, apart from a transposition module (T), a frequency changing module (ME) co-operating with a local oscillator (OL), a low-pass filter (LPF), an amplifier module (A) and an analogue-to-digital converter (CAN), successively, outputting a digital radio signal,

- a module (AC) for converting this digital radio signal into a complex analytical signal;
- a module for decimating this complex analytical signal, outputting a sub-sampled complex analytical signal from this complex analytical signal;
- an autodidactic, predictive equalisation module as claimed in one of claims 1 to 5, outputting an estimated useful signal $z(n)$;
- a demodulator module (D) outputting a demodulated useful signal from this estimated useful signal.

$J_{1,2}$ en dB

nombre d'itérations (*100)

FIG.1a. (ART ANTERIEUR)

Réponse en Amplitude (dB)

Fréquence normalisée ( Nyquist = 1)

FIG.1b. (ART ANTERIEUR)

FIG.2a.
(ART ANTERIEUR)

FIG.2b.
(ART ANTERIEUR)

FIG.3a.

FIG.3b.

FIG. 3c.

FIG. 3d.

FIG.4.

FIG.5.

FIG. 6a.

FIG. 6b.

FIG.6c.

FIG.6d.

J$_{1,2}$ en dB

------- C M A

——— C M A - P D F E

- - - EGALISEUR PRÉDICTIF

——— E G P R

nombre d itérations (*100)

# FIG.7a.

J$_{1,2}$ en dB

- - - C M A

——— EGALISEUR PRÉDICTIF

——— C M A - P D F E

——— E G P R

nombre d itérations (*100)

# FIG.7b.

FIG.7c.

SIGNAL RADIOÉLECTRIQUE NUMERIQUE

$$x(n) \begin{cases} d(n) \\ b(n) \end{cases}$$

---

**1001**

$$x(n) = vr(n) + jvi(n)$$

$x(n)$

---

**1002**

SIGNAL UTILE INTERMÉDIAIRE
$$y(n) = x(n) - yb(n)$$

$x(n)$

---

**1003**

TRAITEMENT NON LINÉAIRE
$$z(n) = T(y(n))$$

$z(n)$   $x(n)$

---

**1004**

SIGNAL INTERFÉRENT DISCRIMINÉ
$$s(n) = x(n) - z(n)$$

$s(n)$   $y(n), z(n)$

---

**1005**

CALCUL SIGNAL D'ERREUR
$$e(n) = y(n) - z(n)$$

$s(n)$   $e(n)$

---

**1006**

ADAPTATION DES PARAMÈTRES
DE FILTRAGE
$$f(n+1) = (f(n), e(n))$$

$f(n+1)$   $s(n)$

---

**1007**

FILTRAGE ADAPTATIF
$$yb(n+1) = \sum_{j=1}^{N} bj(n+1) s(n-j+1)$$

$yb(n)$

---

$n = n+1$

**1008**

FIG.8a.

SIGNAL RADIOÉLECTRIQUE NUMÉRIQUE

$x(n) \begin{cases} d(n) \\ b(n) \end{cases}$

---

**1001**

$$x(n) = vr(n) + jvi(n)$$

$\downarrow x(n)$

---

**1001a**

FILTRAGE PASSE BANDE

$$xr(n) = \sum_{i=1}^{N} r_i(n) x(n-i)$$

$\downarrow xr(n)$

---

**1002**

SIGNAL UTILE INTERMÉDIAIRE

$$xa(n) = xr(n) - yb(n)$$

$\downarrow xa(n)$

---

**1002a**

CONTRÔLE AUTOMATIQUE DE GAIN

$$y(n) = a(n) xa(n)$$

---

**1003**

TRAITEMENT NON LINÉAIRE

$$z(n) = T(y(n))$$

---

**1004**

SIGNAL INTERFÉRENT DISCRIMINÉ

$$s(n) = a(n).x(n-L) - z(n) \text{ ou}$$
$$s(n) = a(n).xr(n) - z(n)$$

---

**1005**

CALCUL SIGNAL D'ERREUR

$$e(n) = y(n) - z(n)$$

$\downarrow e(n)$

---

**1006**

ADAPTATION DES PARAMÈTRES DE FILTRAGE

$$f(n+1) = (f(n), e(n))$$

---

**1007**

FILTRAGE ADAPTATIF

$$yb(n+1) = \sum_{j=1}^{N} b_j(n+1) s(n-j+1)$$

yb(n)

---

n = n+1

**1008**

FIG.8b.

FIG.9a.

RF/FI — $Fi = 10,7\,MHz$

$fi(t)$ — ME — $fi2\,(t)$ — LPF — A — $x(n)$ — CAN — AC — CONVERSION REEL/COMPLEXE — $x(n) = v_r(n) + j\,v_i(n)$

OL

$Fe1 \# 300\,kHz$

$FoL = Fi - Fe1 \# 10,4\,MHz$

$Fe = 4 \, {}^*Fe1 = 1,2\,MHz$

DECIMATION D ORDRE 4 — $x'(n)$ — EGALISATION — $z(n)$ — DEMODULATION FM — $m(n)$ — CNA — A — LPF — $m(t)$ — SIGNAL MULTIPLEX FM ANALOGIQUE

$Fe1 = Fi2 \# 300\,kHz$

D

$m(n)$ SIGNAL MULTIPLEX FM NUMERIQUE

FIG.9a.

FILTRE PASSE-BANDE — $v_r(n)$

SIGNAL REEL $x(n)$

FILTRE DE HUBERT — $v_i(n)$

SIGNAL ANALYTIQUE COMPLEXE $x(n) = v_r(n) + j\,v_i(n)$

FIG.9b.

$x'(n)$ — $z^{-L}$ (60) — $x'(n-L)$ (61) — R(z) — (62) — $y_r(n)$

GSR

(2)(1) $x_r(n)$

$y_b(n)$

$x_a(n)$ — a (21) — GSA — $y(n)$ — a (2) — $T(y(n))$ — $z(n)$

$3_1$ — a

$e(n)$ (4)

GSB — B(z) — 5

$s(n)$

FIG.9c.

36

EP 0 944 211 B1

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0707401 A

**Littérature non-brevet citée dans la description**

- **P.CHEVALIER.** *thèse de doctorat,* 1991
- **J.R. TREICHLER ; B.G. AGEE.** A new approach to multipath correction of constant modulus signals. *IEEE Trans. Acoust. Speech, Signal Processing,* Avril 1983, vol. ASSP-31, 459-472
- **C.A. BELFIORE ; J.H. PARK.** Decision Feedback Equalization. *Proceedings of the IEEE,* Août 1979, vol. 67 (8
- **LANG TONG ; DAN LIU.** *BLIND PREDICTIVE DE-CISION-FEEDBACK EQUALIZATION VIA THE CONSTANT MODULUS ALGORITHM,* U-157
- Décision feedback equalization and identification of linear channels using blind algorithms of the Bussgang type. *29th ASILOMAR CONFERENCE,* 1995, 335-340